(19) Europäisches Patentamt
European Patent Office
Office européen des brevets

(11) **EP 4 382 223 A1**

(12) **EUROPEAN PATENT APPLICATION**
published in accordance with Art. 153(4) EPC

(43) Date of publication:
**12.06.2024 Bulletin 2024/24**

(21) Application number: **22867018.8**

(22) Date of filing: **17.06.2022**

(51) International Patent Classification (IPC):
**B21D 22/00** (2006.01)    **G06F 30/23** (2020.01)
**G06F 113/22** (2020.01)

(52) Cooperative Patent Classification (CPC):
**B21D 22/00; G06F 30/23;** G06F 2113/22

(86) International application number:
**PCT/JP2022/024332**

(87) International publication number:
**WO 2023/037689 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.09.2021  JP 2021147435**

(71) Applicant: **JFE Steel Corporation
Tokyo 100-0011 (JP)**

(72) Inventors:
• **KARIYAZAKI, Yuta
Tokyo 100-0011 (JP)**
• **SATO, Kentaro
Tokyo 100-0011 (JP)**

(74) Representative: **Hoffmann Eitle
Patent- und Rechtsanwälte PartmbB
Arabellastraße 30
81925 München (DE)**

(54) **PRESS FORMING CRACK DETERMINATION METHOD, PRESS FORMING CRACK DETERMINATION APPARATUS, AND PRESS FORMING CRACK DETERMINATION PROGRAM, AND PRESS FORMING CRACK SUPPRESSING METHOD**

(57)    A press forming fracture determination method according to the present invention is used to determine the presence or absence of fracture occurrence in a portion of the metal sheet in which a deformation path changes from compressive deformation to tensile deformation in press forming on the metal sheet, and includes: a step (S10) of deriving a forming limit condition related to fracture occurrence in the metal sheet based on a basic forming test in which a metal sheet is deformed in a deformation path that changes from compressive deformation to tensile deformation and FEM analysis therefor; and a step (S20) of determining the presence or absence of fracture occurrence in a portion in which the deformation path changes from compressive deformation to tensile deformation in the press forming on the metal sheet based on the derived forming limit condition.

FIG.1

FORMING LIMIT CONDITION DERIVATION STEP — S10
BASIC FORMING TEST PROCESS — S11
BASIC FORMING TEST FEM ANALYSIS PROCESS — S13
BASIC FORMING TEST FRACTURE ESTIMATION PARAMETER CALCULATION PROCESS — S15
BASIC FORMING TEST FRACTURE ESTIMATION PARAMETER PLOT PROCESS — S17
FORMING LIMIT CONDITION ACQUISITION PROCESS — S19

PRESS FORMING LIMIT DETERMINATION STEP — S20
PRESS FORMING FEM ANALYSIS PROCESS — S21
PRESS FORMING FRACTURE DETERMINATION REGION SETTING PROCESS — S23
PRESS FORMING FRACTURE ESTIMATION PARAMETER CALCULATION PROCESS — S25
PRESS FORMING PRESENCE OR ABSENCE OF FRACTURE OCCURRENCE DETERMINATION PROCESS — S27

EP 4 382 223 A1

**Description**

Field

The present invention relates to a press forming fracture determination method, a press forming fracture determination device, and a press forming fracture determination program for determining the presence or absence of fracture occurrence in a portion of a metal sheet in which a deformation path changes from compressive deformation to tensile deformation in press forming on the metal sheet. Furthermore, the present invention relates to a press forming fracture inhibition method for inhibiting the fracture occurrence based on a result of the determination.

Background

In order to respond to recent energy and global environmental problems, there is an increasing demand for weight reduction of an automotive body for improving fuel efficiency of an automobile and improvement of collision safety. In order to meet these requirements, high-strength steel sheets aiming at the weight reduction of an automotive body have been applied in an expanding manner. Then, development of a technique for pressing high-tensile steel sheets to form automotive components having various shapes is further demanded to achieve both crash worthiness and weight reduction of an automotive body. Furthermore, power conversion is rapidly progressing, and, for example, developed countries aim to abolish gasoline-powered vehicles. In particular, shifts to electric vehicles are remarkably made. An electric vehicle needs to load a battery on the automotive body thereof. Therefore, a demand for automotive components, such as a battery case, obtained by performing deep drawing on a metal sheet may rapidly increase. There is an urgent need for developing a press forming technique that meets such a demand.

The most significant problem of the press forming technique is fracture generated in a press forming course. In general, the form of press forming in which fracture occurs during the press forming can be classified into four types: bending deformation, stretch flanging deformation, drawing deformation, and bulging deformation. Then, in these forms of press forming, some techniques for preliminarily determining the presence or absence of fracture occurrence have been proposed. For example, a method of determining bending fracture from an amount of bending outside surface strain at the time of fracture occurrence in a V-bending test is disclosed as a method of determining fracture occurrence in bending deformation (Patent Literature 1). Furthermore, a method of calculating a forming limit of sheet edge fracture in a stretch flange portion from a strain gradient in the vicinity of a sheared edge after a hole expansion test is disclosed as a method of determining fracture occurrence in the stretch flanging deformation (Patent Literature 2).

Moreover, a forming limit diagram (FLD) is widely used to determine fracture occurrence in the drawing deformation and the bulging deformation (Non Patent Literature 1). The FLD can be obtained by a simple forming test. Furthermore, in press forming of a press forming product using a metal sheet (blank) on which a scribed circle and various dot patterns are printed, the FLD can be easily applied to determine the presence or absence of fracture occurrence in an actual press forming product by measuring strain distribution of the metal sheet based on a change in the print shape. Furthermore, many commercial computer aided engineering (CAE) solver have a function of determining the presence or absence of fracture occurrence with the FLD by using a result obtained by press forming simulation.

Citation List

Patent Literature

Patent Literature 1: JP 2013-128956 A
Patent Literature 2: JP 2009-204427 A

Non Patent Literature

Non Patent Literature 1: ISO 12004-2:2008, "Metallic materials - Sheet and strip - Determination of forming-limit curves - Part 2: Determination of forming-limit curves in the laboratory", 2008.

Summary

Technical Problem

Only the presence or absence of fracture generated in a fixed deformation path in drawing forming and bulging forming, however, can be determined by the FLD. A forming limit in a case where the deformation path changes from compressive deformation to tensile deformation during press forming is different form that in a case where the deformation occurs in the fixed deformation path, so that the determination of the presence or absence of fracture occurrence using the FLD cannot be applied. Furthermore, when the deformation path changes from a primary path to a secondary path, an infinite number of deformation paths are possible due to a combination of respective deformation patterns (compressive deformation and tensile deformation) of the primary path and the secondary path and the difference in a strain distribution ratio that changes from the primary path to the secondary path. Therefore, there is a limit in determining the presence or absence of fracture occurrence with the FLD created based on a simple forming test in which the deformation path is fixed. Moreover, wrinkles generated during compressive deformation of a metal sheet in press forming change stress at a portion where the wrinkles are generated and stress around the portion. Therefore, an influence of the generated wrinkles on a forming limit needs to be considered. Unfortunately, such an influence cannot be considered by using the FLD.

In particular, when a deformation path changes from compressive deformation to tensile deformation in press forming based on drawing in press forming of a complicated shape of an actual automotive part or the like, the following problems may occur. That is, when a compressive deformation amount at the time of compressive deformation in the primary path is large, even when a tensile deformation amount in the subsequent secondary path is small, fracture easily occurs. There has been some cases in which the presence or absence of fracture occurrence cannot be appropriately determined by using the FLD. Moreover, there has been a demand for a technique for inhibiting fracture occurrence in press forming in which the deformation path changes from the primary path to the secondary path.

The present invention has been made to solve the above-described problems, and an object thereof is to provide a press forming fracture determination method, a press forming fracture determination device, and a press forming fracture determination program for determining the presence or absence of fracture occurrence in a portion of a metal sheet in which a deformation path changes from compressive deformation to tensile deformation in a press forming course of the metal sheet. Furthermore, another object of the present invention is to provide a press forming fracture inhibition method capable of inhibiting fracture occurrence based on a determination of the presence or absence of the fracture occurrence.

Solution to Problem

A press forming fracture determination method according to the present invention for determining presence or absence of fracture occurrence in a portion of a metal sheet in which a deformation path changes from compressive deformation to tensile deformation in press forming on the metal sheet includes: a forming limit condition derivation step; and a press forming limit determination step, wherein the forming limit condition derivation step includes: a basic forming test process in which a basic forming test in which the metal sheet is deformed in the deformation path is conducted for various forming conditions and the presence or absence of fracture occurrence in the portion of the metal sheet in which the deformation path changes from compressive deformation to tensile deformation is acquired for the various forming conditions; a basic forming test FEM analysis process in which FEM analysis for the basic forming test on the metal sheet is performed for various forming conditions and a change in a thickness of the metal sheet is calculated; a basic forming test fracture estimation parameter calculation process in which a maximum thickness increment and a relative thickness decrement are determined as basic forming test fracture estimation parameters for the various forming conditions based on the change in the thickness of the metal sheet calculated in the basic forming test FEM analysis process, the maximum thickness increment being an amount of a change in thickness until the metal sheet reaches a maximum thickness in compressive deformation of the deformation path, the relative thickness decrement being an amount of a change in thickness until the metal sheet changes in the deformation path from compressive deformation to tensile deformation to reach a minimum thickness from the maximum thickness; a basic forming test fracture estimation parameter plot process in which the presence or absence of fracture occurrence acquired for the various forming conditions in the basic forming test process and the basic forming test fracture estimation parameters determined for the various forming conditions in the basic forming test fracture estimation parameter calculation process are plotted on two-dimensional coordinates with the maximum thickness increment and the relative thickness decrement as axes in association with each other; and a forming limit condition acquisition process in which a forming limit diagram for distinguishing the presence or absence of fracture occurrence in a portion of the metal sheet deformed in the deformation path is determined as a forming limit condition based on distribution of the presence or absence of fracture occurrence plotted on the two-dimensional coordinates, and the press forming limit determination step includes: a press forming FEM analysis process in which FEM analysis for press forming for the metal sheet is performed; a press forming fracture determination region setting process in which a region of the metal sheet in which the deformation path changes from compressive deformation to tensile deformation is set as a fracture occurrence determination region for determining the presence or absence of fracture occurrence based on a result of the FEM analysis in the press forming FEM analysis process; a press forming fracture estimation parameter calculation process in which the maximum thickness increment in compressive deformation in press forming on the metal sheet and the relative thickness decrement in tensile deformation in the press forming are calculated as press forming fracture estimation parameters in the press forming for the fracture occurrence determination region set in the press forming fracture determination region setting process; and a press forming presence or absence of fracture occurrence determination process in which the presence or absence of fracture occurrence in the fracture occurrence determination region is determined by comparing the press forming fracture estimation parameters calculated in the press forming fracture estimation parameter calculation process with the forming limit condition acquired in the forming limit condition acquisition process.

A press forming fracture determination device according to the present invention for determining presence or absence of fracture occurrence in a portion of a metal sheet in which a deformation path changes from compressive deformation to tensile deformation in press forming on the metal sheet includes: a forming limit condition derivation unit; and a press forming limit determination unit, wherein the forming limit condition derivation unit includes: a basic forming test result capturing unit configured to capture a test result related to the presence or absence of fracture occurrence in the portion of the metal sheet in which the deformation path changes from compressive deformation to tensile deformation acquired for various forming conditions of a basic forming test in which the metal sheet is deformed in the deformation path; a basic forming test FEM analysis unit configured to perform FEM analysis for the basic forming test on the metal sheet for the various forming conditions and calculate a change in a thickness of the metal sheet; a basic forming test fracture estimation parameter calculation unit configured to determine a maximum thickness increment and a relative thickness decrement as basic forming test fracture estimation parameters for the various forming conditions based on the change in the thickness of the metal sheet calculated by the basic forming test FEM analysis unit, the maximum thickness increment being an amount of a change in thickness until the metal sheet reaches a maximum thickness in compressive deformation of the deformation path, the relative thickness decrement being an amount of a change in thickness until the metal sheet changes in the deformation path from compressive deformation to tensile deformation to reach a minimum thickness from the maximum thickness; a basic forming test fracture estimation parameter plot unit configured to plot the presence or absence of fracture occurrence captured by the basic forming test result capturing unit and the basic forming test fracture estimation parameters determined by the basic forming test fracture estimation parameter calculation unit on two-dimensional coordinates with the maximum thickness increment and the relative thickness decrement as axes in association with each other; and a forming limit condition acquisition unit configured to determine a forming limit diagram for distinguishing the presence or absence of fracture occurrence in a portion of the metal sheet deformed in the deformation path as a forming limit condition based on distribution of the presence or absence of fracture occurrence plotted on the two-dimensional coordinates, and the press forming limit determination unit includes: a press forming FEM analysis unit configured to perform FEM analysis for press forming for the metal sheet; a press forming fracture determination region setting unit configured to set a region of the metal sheet in which the deformation path changes from compressive deformation to tensile deformation as a fracture occurrence determination region for determining the presence or absence of fracture occurrence based on a result of the FEM analysis performed by the press forming FEM analysis unit; a press forming fracture estimation parameter calculation unit configured to determine the maximum thickness increment in compressive deformation in press forming on the metal sheet and the relative thickness decrement in tensile deformation in the press forming as press forming fracture estimation parameters in the press forming for the fracture occurrence determination region set by the press forming fracture determination region setting unit; and a press forming presence or absence of fracture occurrence determination unit configured to determine the presence or absence of fracture occurrence in the fracture occurrence determination region by comparing the press forming fracture estimation parameters calculated by the press forming fracture estimation parameter calculation unit with the forming limit condition acquired by the forming limit condition acquisition unit.

A press forming fracture determination program according to the present invention for determining presence or absence of fracture occurrence in a portion of a metal sheet in which a deformation path changes from compressive deformation to tensile deformation in press forming on the metal sheet has a function of causing a computer to operate as: a forming limit condition derivation unit; and a press forming limit determination unit, wherein the press forming fracture determination program has a function of causing the forming limit condition derivation unit to operate as: a basic forming test result capturing unit configured to capture a test result related to the presence or absence of fracture occurrence in the portion of the metal sheet in which the deformation path changes from compressive deformation to tensile deformation acquired for various forming conditions of a basic forming test in which the metal sheet is deformed in the deformation path; a basic forming test FEM analysis unit configured to perform FEM analysis for the basic forming test on the metal sheet for the various forming conditions and calculate a change in a thickness of the metal sheet; a basic forming test fracture estimation parameter calculation unit configured to determine a maximum thickness increment and a relative thickness decrement as basic forming test fracture estimation parameters for the various forming conditions based on the change in the thickness of the metal sheet calculated by the basic forming test FEM analysis unit, the maximum thickness increment being an amount of a change in thickness until the metal sheet reaches a maximum thickness in compressive deformation of the deformation path, the relative thickness decrement being an amount of a change in thickness until the metal sheet changes in the deformation path from compressive deformation to tensile deformation to reach a minimum thickness from the maximum thickness; a basic forming test fracture estimation parameter plot unit configured to plot the presence or absence of fracture occurrence in the metal sheet under the various forming conditions captured by the basic forming test result capturing unit and the basic forming test fracture estimation parameters determined by the basic forming test fracture estimation parameter calculation unit on two-dimensional coordinates with the maximum thickness increment and the relative thickness decrement as axes in association with each other; and a forming limit condition acquisition unit configured to determine a forming limit diagram for distinguishing the presence or absence of fracture occurrence in a portion of the metal sheet deformed in the deformation path as a forming limit condition based on distribution of the presence or absence of fracture occurrence plotted on the two-dimensional coordinates, and the press forming fracture determination program has a function of causing the press forming limit determination unit to operate as: a forming limit condition acquisition unit configured to determine a forming limit condition related to the presence or absence of fracture occurrence in a portion of the metal sheet deformed in the deformation path; a press forming FEM analysis unit configured to perform FEM analysis for press forming for the metal sheet; a press forming fracture determination region setting unit configured to set a region of the metal sheet in which the deformation path changes from compressive deformation to tensile deformation as a fracture occurrence determination region for determining the presence or absence of fracture occurrence based on a result of the FEM analysis performed by the press forming FEM analysis unit; a press forming fracture estimation parameter calculation unit configured to determine the maximum thickness increment in compressive deformation in press forming on the metal sheet and the relative thickness decrement in tensile deformation in the press forming as press forming fracture estimation parameters in the press forming for the fracture occurrence determination region set by the press forming fracture determination region setting unit; and a press forming presence or absence of fracture occurrence determination unit configured to determine the presence or absence of fracture occurrence in the fracture occurrence determination region by comparing the press forming fracture estimation parameters calculated by the press forming fracture estimation parameter calculation unit with the forming limit condition acquired by the forming limit condition acquisition unit.

A press forming fracture inhibition method includes: determining presence or absence of fracture occurrence in a portion of a metal sheet in which a deformation path changes from compressive deformation to tensile deformation in press forming on the metal sheet by the press forming fracture determination method according to the present invention; and determining a forming condition for inhibiting fracture occurrence in the press forming based on a result of the determining, wherein, when determination of presence of fracture occurrence is made for the fracture occurrence determination region in the press forming presence or absence of fracture occurrence determination process, until determination of absence of fracture occurrence is made for the fracture occurrence determination region, a forming condition in the press forming FEM analysis process is changed, and the press forming FEM analysis process, the press forming fracture determination region setting process, the press forming fracture estimation parameter calculation process, and the press forming presence or absence of fracture occurrence determination process are repeated.

Advantageous Effects of Invention

In the present invention, a basic forming test in which a metal sheet is deformed in a deformation path that changes from compressive deformation to tensile deformation is conducted to derive a forming limit condition related to the presence or absence of fracture occurrence in a portion that changes from compressive deformation to tensile deformation of the metal sheet. Then, the presence or absence of fracture occurrence in a portion of a metal sheet in which a deformation path changes from compressive deformation to tensile deformation in press forming on the metal sheet can be determined based on the derived forming limit condition.

According to the present invention, the fracture occurrence in a portion of a metal sheet in which a deformation path changes from compressive deformation to tensile deformation in press forming on the metal sheet is determined, and a forming condition can be changed based on the determination. The change in the forming condition includes a change in the shape of the metal sheet and a modification in a tool of press forming. Furthermore, a period for determining a forming condition capable of inhibiting fracture occurrence in actual press forming can be significantly shortened.

Brief Description of Drawings

FIG. 1 is a flowchart illustrating a flow of processing of a press forming fracture determination method according to a first embodiment of the present invention.

FIG. 2 is a graph illustrating a change in the thickness of a metal sheet in a portion of the metal sheet in which a deformation path changes from compressive deformation to tensile deformation and a maximum thickness increment and a relative thickness decrement determined as fracture estimation parameters for determining the presence or absence of fracture occurrence in the first and second embodiments of the present invention.

FIG. 3 illustrates one example of a tool of press forming used for drawing a metal sheet to form a square tube type bottomed container in a basic forming test in the first and second embodiments of the present invention ((a) perspective view, (b) view of cross section parallel to forming direction, and (c) view of cross section orthogonal to forming direction).

FIG. 4 illustrates a square tube type bottomed columnar container formed by drawing a metal sheet and a portion in which a deformation path changes from compressive deformation to tensile deformation in the drawing.

FIG. 5 illustrates shapes and dimensions of metal sheets used in the first and second embodiments of the present invention.

FIG. 6 is a graph indicating a result obtained plotting the presence or absence of fracture occurrence determined by a basic forming test in which a metal sheet is drawn to form a square tube shape on two-dimensional coordinates in association with a maximum thickness increment and a relative thickness decrement determined as basic forming test fracture estimation parameters by FEM element analysis of a basic forming test in the first embodiment of the present invention and a forming limit diagram created based on the distribution of the plotted presence or absence of fracture occurrence.

FIG. 7 is a block diagram of a press forming fracture determination device according to the first embodiment of the present invention.

FIG. 8 is a flowchart illustrating a flow of processing of a press forming fracture inhibition method according to a second embodiment of the present invention.

FIG. 9 illustrates a tool of press forming used for drawing in an example ((a) perspective view, (b) view of A-A cross section parallel to forming direction, (c) view of cross section orthogonal to forming direction, and (d) view of B-B cross section parallel to forming direction).

FIG. 10 illustrates a square tube type bottomed columnar container to be formed by drawing in the example.

FIG. 11 illustrates a metal sheet used for drawing in the example.

FIG. 12 is a graph (part 1) indicating results of fracture determinations in the example.

FIG. 13 is a view (part 1) illustrating a fracture risk determined based on the fracture determination results in the example.

FIG. 14 is a graph (part 2) indicating results of fracture determinations in the example.

FIG. 15 is a view (part 2) illustrating a fracture risk determined based on the fracture determination results in the example.

Description of Embodiments

<Circumstances Leading to Invention>

Prior to describing the first and second embodiments of the present invention, circumstances leading to conception of the present invention will be described.

The inventors have intensively studied the reason why a forming limit in a case where a deformation path of a metal sheet changes from compressive deformation to tensile deformation during press forming is different from that in a case where the metal sheet is deformed in a fixed deformation path. The inventors have focused on the fact that a large amount of deformation of a primary path due to compressive deformation easily leads to crack (fracture) even in a case of a small amount of subsequent deformation of a secondary path due to tensile deformation. Then, the inventors have estimated a mechanism in which deformation characteristics such as material ductility is deteriorated (damaged) due to influences of work hardening caused by compressive deformation in the primary path and fracture easily occurs due to subsequent tensile deformation in the secondary path. Therefore, the inventors have conceived of representing each of a compressive deformation amount based on compressive deformation in the primary path and a tensile deformation amount based on tensile deformation in the secondary path by using true strain in a thickness direction of a metal sheet (thickness change amount).

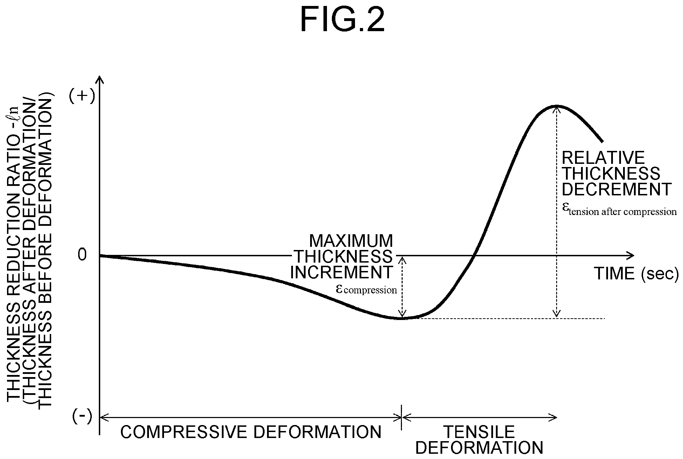

FIG. 2 schematically illustrates a change in thickness in a case where a metal sheet is deformed in a deformation path that changes from compressive deformation to tensile deformation. In FIG. 2, the vertical axis represents a thickness reduction ratio given by true strain (= -ln (thickness after deformation/thickness before deformation)) in the thickness direction of the metal sheet in the deformation path that changes from compressive deformation to tensile deformation, and the horizontal axis represents an elapsed time since the start of deformation of the metal sheet. At this time, (i) true strain "$\varepsilon_{compression}$" in the thickness direction caused by compressive deformation in the primary path and (ii) true strain "$\varepsilon_{tension\ after\ compression}$" in the thickness direction caused by tensile deformation in the secondary path are given by Expressions (1) and (2), respectively.

$$\varepsilon_{compression} = -\ell n(hc/h0) \qquad \cdots (1)$$

$$\varepsilon_{tension\ after\ compression} = -\ell n\big((hc - ht)/hc\big) \qquad \cdots (2)$$

where, h0: initial thickness of thin metal sheet,

he: maximum thickness in compressive deformation, and

ht: minimum thickness in tensile deformation

The inventors have conceived of determining true strains caused by compressive deformation and tensile deformation as a compressive deformation amount and a tensile deformation amount and determining the presence or absence of fracture occurrence in a metal sheet in a case where the metal sheet is deformed in the deformation path that changes from compressive deformation to tensile deformation based on these deformation amounts. Furthermore, the relation between work hardening caused by compressive deformation and subsequent deterioration in deformation characteristics such as ductility is considered to be a characteristic unique to a metal sheet used in press forming. Therefore, the inventors have conceived of determining the presence or absence of fracture occurrence in a metal sheet through a forming test, in which the metal sheet is deformed in the deformation path that changes from compressive deformation to tensile deformation, instead of actual press forming.

Even if the presence or absence of fracture occurrence can be determined by the forming test in which a metal sheet is deformed in a deformation path that changes from compressive deformation to tensile deformation, however, it is difficult to actually and directly measure a maximum thickness hc based on compressive deformation of the metal sheet and a minimum thickness ht based on tensile deformation in the deformation path.

Therefore, the inventors performed a finite element method (FEM) analysis in which deformation of a metal sheet in a deformation path that changes from compressive deformation to tensile deformation is reproduced. Then, the inventors calculated a change in the thickness of an element corresponding to a portion that changes from compressive deformation to tensile deformation of the metal sheet, and determined the maximum thickness and the minimum thickness from the calculated change in the thickness.

The present invention has been made based on the above-described study. The first and second embodiments of the present invention will be described below.

[First Embodiment]

<Press Forming Fracture Determination Method>

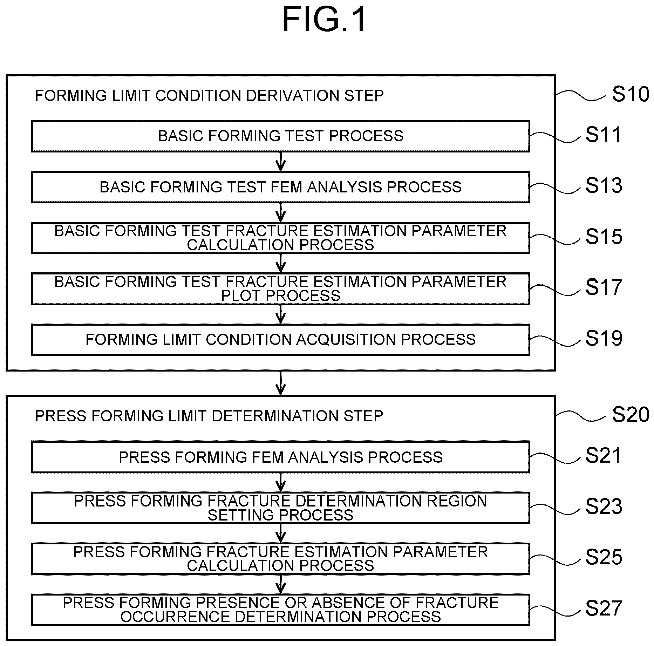

A press forming fracture determination method according to the first embodiment of the present invention is used to determine the presence or absence of fracture occurrence in a portion of a metal sheet in which a deformation path changes from compressive deformation to tensile deformation in press forming on the metal sheet. As illustrated in FIG. 1, the press forming fracture determination method includes a forming limit condition derivation step S10 and a press forming limit determination step S20.

<<Forming Limit Condition Derivation Step>>

In the forming limit condition derivation step S10, a basic forming test in which a metal sheet is deformed in a deformation path that changes from compressive deformation to tensile deformation is conducted to derive a forming limit condition related to the presence or absence of fracture occurrence in a portion that changes from compressive deformation to tensile deformation of the metal sheet. As illustrated in FIG. 1, the forming limit condition derivation step S10 includes a basic forming test process S11, a basic forming test FEM analysis process S13, a basic forming test fracture estimation parameter calculation process S15, a basic forming test fracture estimation parameter plot process S17, and a forming limit condition acquisition process S19.

(Basic Forming Test Process)

In the basic forming test process S11, the basic forming test in which a metal sheet is deformed in a deformation path that changes from compressive deformation to tensile deformation is conducted under various forming conditions to acquire the presence or absence of fracture occurrence in a portion of the metal sheet in which a deformation path changes from compressive deformation to tensile deformation for the various forming conditions.

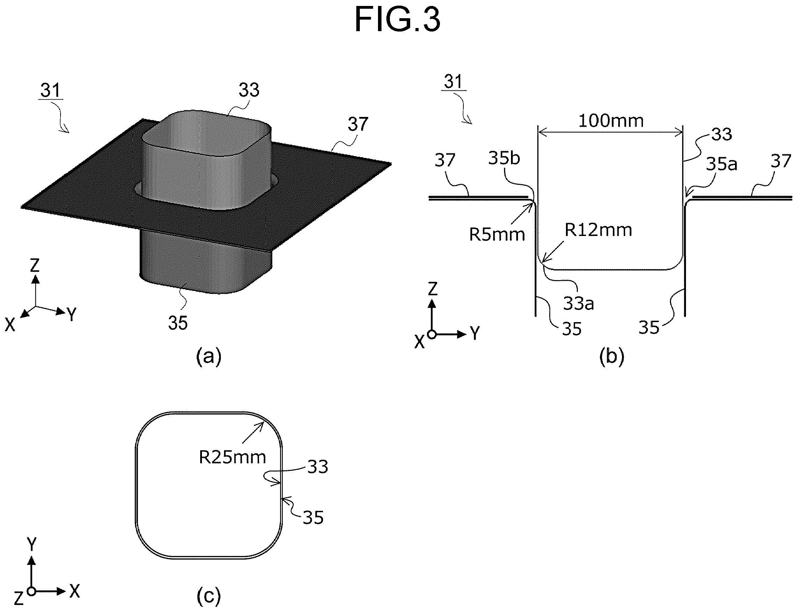

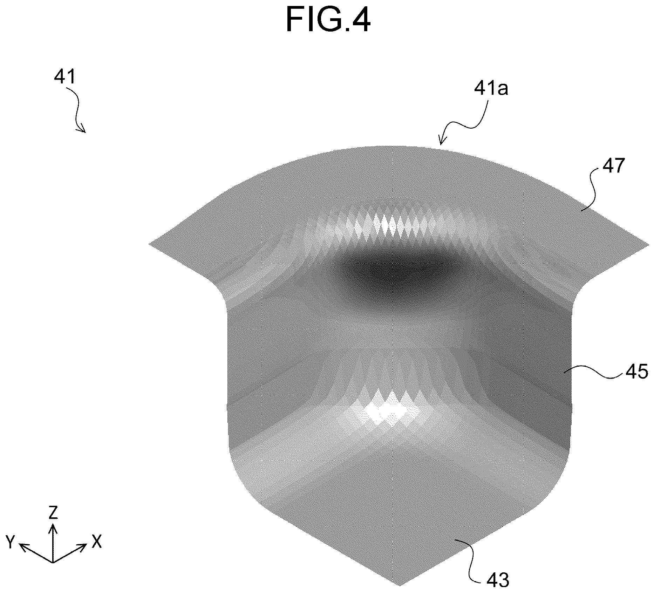

In the first embodiment, a basic forming test is conducted. In the basic forming test, a metal sheet (not illustrated) is drawn to form a square tube type bottomed columnar container 41 in FIG. 4 by using a tool 31 of press forming. The tool 31 of press forming includes a punch 33, a die 35, and a blank holder 37 in FIG. 3. As illustrated in FIG. 4, the bottomed columnar container 41 includes a bottom portion 43, a side wall portion 45, and a flange portion 47. FIG. 4 illustrates 1/4 of a region centered on a corner portion 41a in the bottomed columnar container 41.

In drawing to form the bottomed columnar container 41, a punch 33 is pressed into a die hole portion 35a of a die 35 with an end of the metal sheet being sandwiched between the die 35 and the blank holder 37, so that the metal sheet is drawn into the die hole portion 35a by the punch 33. This causes the metal sheet to flow toward the die hole portion 35a and undergo compressive deformation along an outer edge circumferential direction of the die hole portion 35a. Then, the portion of the metal sheet which has undergone the compressive deformation is brought into contact with a shoulder part 33a of the punch and pressed into the die hole portion 35a to undergo tensile deformation. The portion undergoes tensile deformation even after being drawn into the die hole portion 35a. As a result, the corner portion 41a of the bottomed columnar container 41 and the side wall portion 45 therearound are formed by a deformation path that changes from compressive deformation to tensile deformation.

Various forming conditions in the basic forming test may be appropriately set by changing, for example, the shape and dimension of the metal sheet, a blank holder pressure on the metal sheet, a lubricated condition for a portion of the metal sheet sandwiched between the die and the blank holder, and a bead-shape to be imparted to the metal sheet. The lubricated condition includes the type, viscosity coefficient, and supply of lubricating oil and the addition of an extreme pressure additive.

In particular, in a basic forming test in which drawing is performed by using the tool of press forming in FIG. 3, the forming conditions can be easily changed by changing the shape of the metal sheet or a pressure of the blank holder 37 to be imparted to the metal sheet.

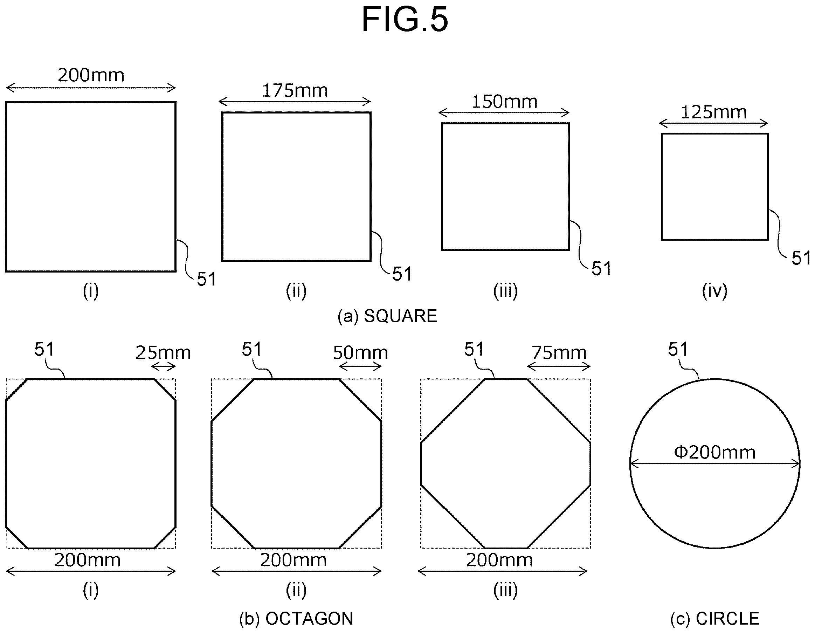

In the first embodiment, the radius of shoulder part of the shoulder part 33a of a punch, the radius of die part of a shoulder part 35b of a die, and a corner radius of the corner portion 41a are set as R12 mm, R5 mm, and R25 mm, respectively. Then, a steel sheet of 980 MPa-class having a thickness of 1.4 mm is adopted as a test material for the metal sheet. A metal sheet 51 having the shape and dimension in FIG. 5 is used. Furthermore, the pressure of the blank holder 37 is changed in a range of 5 to 20 tonf to set various forming conditions in the basic forming test.

Table 1 illustrates forming conditions (shape/dimension of metal sheet and pressure) and the presence or absence of fracture occurrence in a basic forming test in which the metal sheet 51 (FIG. 5) is drawn to form the square tube type bottomed columnar container 41 (FIG. 4).

Table 1

| Shape/dimension of metal sheet | Blank holder pressure (tonf) | Maximum thickness increment | Relative thickness decrement | Presence or absence of fracture occurrence |
|---|---|---|---|---|
| Square: 200 mm × 200 mm | 5 | -0.029 | 0.154 | Fracture absence |
| Square: 200 mm × 200 mm | 10 | -0.029 | 0.159 | Fracture absence |
| Square: 200 mm × 200 mm | 15 | -0.029 | 0.15 | Fracture absence |
| Square: 200 mm × 200 mm | 20 | -0.029 | 0.03 | Fracture absence |
| Square: 175 mm × 175 mm | 5 | -0.049 | 0.103 | Fracture absence |
| Square: 175 mm × 175 mm | 10 | -0.049 | 0.123 | Fracture presence |
| Square: 175 mm × 175 mm | 15 | -0.049 | 0.125 | Fracture presence |
| Square: 175 mm × 175 mm | 20 | -0.049 | 0.126 | Fracture presence |
| Square: 150 mm × 150 mm | 5 | -0.048 | 0.059 | Fracture absence |
| Square: 150 mm × 150 mm | 10 | -0.048 | 0.059 | Fracture absence |
| Square: 150 mm × 150 mm | 15 | -0.048 | 0.059 | Fracture absence |

(continued)

| Shape/dimension of metal sheet | Blank holder pressure (tonf) | Maximum thickness increment | Relative thickness decrement | Presence or absence of fracture occurrence |
|---|---|---|---|---|
| Square: 150 mm × 150 mm | 20 | -0.048 | 0.059 | Fracture absence |
| Square: 125 mm × 125 mm | 5 | -0.026 | 0.059 | Fracture absence |
| Square: 125 mm × 125 mm | 10 | -0.027 | 0.059 | Fracture absence |
| Square: 125 mm × 125 mm | 15 | -0.026 | 0.059 | Fracture absence |
| Square: 125 mm × 125 mm | 20 | -0.026 | 0.059 | Fracture absence |
| Octagon: corner cut 25 mm | 5 | -0.029 | 0.162 | Fracture absence |
| Octagon: corner cut 25 mm | 10 | -0.029 | 0.167 | Fracture absence |
| Octagon: corner cut 25 mm | 15 | -0.029 | 0.155 | Fracture absence |
| Octagon: corner cut 25 mm | 20 | -0.029 | 0.03 | Fracture absence |
| Octagon: corner cut 50 mm | 5 | -0.026 | 0.188 | Fracture absence |
| Octagon: corner cut 50 mm | 10 | -0.026 | 0.194 | Fracture absence |
| Octagon: corner cut 50 mm | 15 | -0.026 | 0.179 | Fracture absence |
| Octagon: corner cut 50 mm | 20 | -0.026 | 0.031 | Fracture absence |
| Octagon: corner cut 75 mm | 5 | -0.229 | 0.022 | Fracture absence |
| Octagon: corner cut 75 mm | 10 | -0.193 | 0.099 | Fracture presence |
| Octagon: corner cut 75 mm | 15 | -0.191 | 0.064 | Fracture presence |
| Octagon: corner cut 75 mm | 20 | -0.191 | 0.005 | Fracture absence |
| Circle: φ 200 mm | 5 | -0.05 | 0.154 | Fracture presence |
| Circle: φ 200 mm | 10 | -0.05 | 0.153 | Fracture presence |
| Circle: φ 200 mm | 15 | -0.05 | 0.161 | Fracture presence |
| Circle: φ 200 mm | 20 | -0.05 | 0.015 | Fracture absence |

(Basic Forming Test FEM Analysis Process (Hereinafter, Abbreviated as First Analysis Process))

In the first analysis process S13, FEM analysis for a basic forming test for a metal sheet is performed for various forming conditions to calculate a change in the thickness of the metal sheet.

In the first embodiment, the FEM analysis in the first analysis process S13 is performed for a basic forming test in which the metal sheet 51 (FIG. 5) is drawn to form the square tube type bottomed columnar container 41 (FIG. 4) by using the tool 31 of press forming (FIG. 3). Then, the forming conditions in the first analysis process S13 are the same as those of the basic forming test in the basic forming test process S11.

FIG. 2 illustrates one example in which a change in the thickness of a portion that changes from compressive deformation to tensile deformation of the metal sheet is calculated by the FEM analysis. As illustrated in FIG. 2, the metal sheet increases in thickness in a course of compressive deformation to reach the maximum thickness hc, and decreases in thickness in a course of tensile deformation after the compressive deformation. The minimum value of the thickness in the tensile deformation is denoted as the minimum thickness ht.

In the first analysis process S13, a change in the thickness of an element corresponding to a portion of the metal sheet, for which the presence or absence of fracture occurrence has been acquired in the basic forming test process S11, is calculated.

(Basic Forming Test Fracture Estimation Parameter Calculation Process (Hereinafter, Abbreviated as First Calculation Process))

In the first calculation process S15, basic forming test fracture estimation parameters are calculated for various forming conditions based on the change in the thickness of the metal sheet calculated in the first analysis process S13. A basic forming test fracture estimation parameter includes a maximum thickness increment and a relative thickness decrement. The maximum thickness increment is an amount of change in thickness until the metal sheet reaches the maximum thickness hc in compressive deformation of the deformation path. The relative thickness decrement is an amount of change in thickness until the deformation path changes from compressive deformation to tensile deformation and the metal sheet reaches the minimum thickness ht from the maximum thickness hc.

When the change in the thickness of the metal sheet has been calculated in the first analysis process S13 as illustrated in FIG. 2, the true strain "εcompression" in compressive deformation is calculated as the maximum thickness increment by using an initial thickness h0 of the metal sheet and the maximum thickness hc in the compressive deformation in the first calculation process S15. The true strain "εcompression" in compressive deformation is given by Expression (1) above. Furthermore, in the first calculation process S15, the true strain "εtension after compression" in tensile deformation after compressive deformation given by Expression (2) above is calculated as the relative thickness decrement by using the maximum thickness hc and the minimum thickness ht in tensile deformation. Then, in the first calculation process S15, the maximum thickness increment and the relative thickness decrement calculated as described above are acquired as basic forming test fracture estimation parameters.

Table 1 above illustrates results of the maximum thickness increment and the relative thickness decrement calculated as the basic forming test fracture estimation parameters for each forming condition by FEM analysis for a basic forming test in which the metal sheet 51 (FIG. 5) is drawn to form the square tube type bottomed columnar container 41 (FIG. 4).

(Basic Forming Test Fracture Estimation Parameter Plot Process (Hereinafter, Abbreviated as Plot Process))

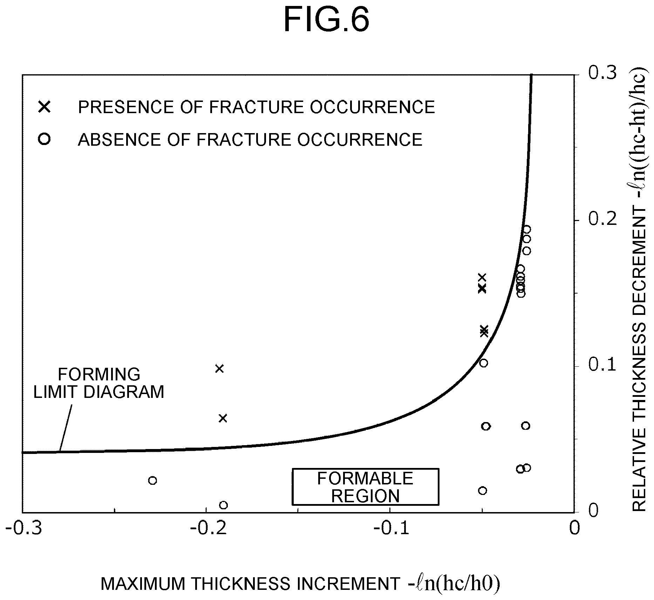

In the plot process S17, as illustrated in FIG. 6 in one example, the presence or absence of fracture occurrence acquired for various forming conditions in the basic forming test process S11 is associated with the basic forming test fracture estimation parameters determined for various forming conditions in the first calculation process S15. Then, in the plot process S17, plotting is performed on two-dimensional coordinates with the maximum thickness increment and the relative thickness decrement as axes.

In FIG. 6, a plot of a circle mark indicates the absence of fracture occurrence in the basic forming test process S11, and a cross mark indicates the presence of fracture occurrence in the basic forming test process S11.

(Forming Limit Condition Acquisition Process (Hereinafter, Abbreviated as Acquisition Process))

In the acquisition process S19, a forming limit diagram for distinguishing the presence or absence of fracture occurrence in a portion of the metal sheet deformed in the deformation path that changes from compressive deformation to tensile deformation is acquired as a forming limit condition based on the distribution of the presence or absence of fracture occurrence plotted on the two-dimensional coordinates in the plot process S17.

FIG. 6 illustrates one example of the forming limit diagram acquired as the forming limit condition. The forming limit diagram in FIG. 6 was created based on the distribution of the basic forming test fracture estimation parameters plotted on the two-dimensional coordinates in the plot process S17. The forming limit diagram is required to be created by determining, by fitting, a functional expression approximating the boundary between the presence of fracture occurrence and the absence of fracture occurrence in the basic forming test fracture estimation parameters, for example.

In fracture in a forming mode in which the deformation path changes from compressive deformation to tensile deformation targeted by the present invention, a large maximum thickness increment decreases a limit value of the relative thickness decrement while a small maximum thickness increment increases a limit value of the relative thickness decrement. Therefore, the forming limit diagram can be formulated as a high dimension (e.g., cubic) inverse function.

Specifically, a high dimension inverse function is assumed as a forming limit diagram obtained by extracting fracture estimation parameters of the presence of fracture occurrence from the fracture estimation parameters plotted in the plot process S17 and smoothly connecting the extracted fracture estimation parameters. Then, the forming limit diagram is required to be created by determining a coefficient of the inverse function such that the sum of squared error of the extracted fracture estimation parameters and the assumed inverse function is minimized.

All the fracture estimation parameters plotted in a region above the forming limit diagram must indicate the presence of fracture occurrence. Therefore, plots of fracture estimation parameters, being near the boundary between the presence of fracture occurrence and the absence of fracture occurrence, that is, having the minimum relative thickness decrement in each maximum thickness increment are extracted from fracture estimation parameters of the presence of fracture occurrence.

The forming limit diagram in FIG. 6 was created on the assumption of the cubic inverse function in Expression (3). Coefficients in Expression (3) have values of a = 2.1 × 10 - 10, b = 8.9 × 10 - 12, c = 2.0, d = 0, and e = 0.01.

$$y = \frac{e}{ax^3 + b^2 + cx + d} \qquad \cdots (3)$$

<<Press Forming Limit Determination Step>>

In the press forming limit determination step S20, the presence or absence of fracture occurrence in a portion of a metal sheet in which a deformation path changes from compressive deformation to tensile deformation in press forming on the metal sheet is determined based on the forming limit condition derived in the forming limit condition derivation step S10. As illustrated in FIG. 1, the press forming limit determination step S20 includes a press forming FEM analysis process S21, a press forming fracture determination region setting process S23, a press forming fracture estimation parameter calculation process S25, and a press forming presence or absence of fracture occurrence determination process S27.

(Press Forming FEM Analysis Process (Hereinafter, Abbreviated as Second Analysis Process))

In the second analysis process S21, press forming FEM analysis for the metal sheet is performed. Strain, stress, changes in thickness, and the like generated in the metal sheet in press forming can be determined for each element used for FEM analysis by the FEM analysis in the second analysis process S21.

(Press Forming Fracture Determination Region Setting Process (Hereinafter, Abbreviated as Setting Process))

In the setting process S23, a region in which the deformation path changes from compressive deformation to tensile deformation in press forming on the metal sheet is set as a fracture occurrence determination region for determining the presence or absence of fracture occurrence based on a FEM analysis result in the second analysis process S21.
In the setting process S23, an element in which a strain ratio obtained by dividing the minimum principal strain in a press forming course by the maximum principal strain changes from negative (compression) to positive (tension) is set as a fracture determination region for determining the presence or absence of fracture occurrence in press forming based on strain determined for each element.

(Press forming Fracture Estimation Parameter Calculation Process (Hereinafter, Abbreviated as Second Calculation Process))

In the second calculation process S25, a press forming fracture estimation parameter is determined for a fracture occurrence determination region set in the setting process S23 based on the FEM analysis result. The press forming fracture estimation parameter includes a maximum thickness increment and a relative thickness decrement. The maximum thickness increment is an amount of change in thickness up to the maximum thickness in compressive deformation. The relative thickness decrement is an amount of change in thickness from the maximum thickness up to the minimum thickness during change from compressive deformation to tensile deformation. In the embodiment, calculation is performed by setting true strain "εcompression" in compressive deformation given by Expression (1) above as the maximum thickness increment using the initial thickness h0 of the metal sheet and the maximum thickness hc in the compressive deformation. Then, the true strain "εtension after compression" in tensile deformation after compressive deformation given by Expression (2) above is calculated as the relative thickness decrement by using the maximum thickness hc and the minimum thickness ht in tensile deformation.

(Press Forming Presence or Absence of Fracture Occurrence Determination Process (Hereinafter, Abbreviated as Determination Process))

In the determination process S27, the press forming fracture estimation parameter calculated in the second calculation process S25 is compared with the forming limit condition acquired in the acquisition process S19 to determine the presence or absence of fracture occurrence in the fracture occurrence determination region.

Specifically, in the determination process S27, the presence or absence of fracture occurrence in the fracture occurrence determination region is determined as follows. First, press forming fracture estimation parameters determined in the second calculation process S25 are plotted on two-dimensional coordinates in which a vertical axis represents a maximum thickness increment and a horizontal axis represents a relative thickness decrement.

Next, the forming limit diagram acquired as a forming limit condition in the acquisition process S19 of the forming limit condition derivation step S10 is drawn on the two-dimensional coordinates on which the press forming fracture estimation parameters are plotted.

Then, the absence of fracture occurrence is determined when the plotted press forming fracture estimation parameters do not exceed the forming limit diagram, that is, the relative thickness decrement in press forming is smaller than the relative thickness decrement of the forming limit condition corresponding to the maximum thickness increment in the press forming. In contrast, the presence of fracture is determined when the press forming fracture estimation parameters exceed the forming limit diagram, that is, the relative thickness decrement in press forming is larger than the relative thickness decrement of the forming limit condition corresponding to the maximum thickness increment in the press forming.

As described above, in the press forming fracture determination method of the embodiment, a forming limit condition related to the presence or absence of fracture occurrence in a portion that changes from compressive deformation to tensile deformation of the metal sheet is derived by conducting a basic forming test in which a metal sheet is deformed in a deformation path that changes from compressive deformation to tensile deformation and FEM analysis therefor. Then, the presence or absence of fracture occurrence in a portion of a metal sheet in which a deformation path changes from compressive deformation to tensile deformation in press forming on the metal sheet can be determined based on the derived forming limit condition.

In the press forming fracture determination method of the embodiment, the metal sheet is drawn to form the square tube type bottomed columnar container 41 in FIG. 4 by using the tool 31 of press forming in FIG. 3 in a basic forming test on the metal sheet. In such drawing of the metal sheet, the metal sheet undergoes compressive deformation in a direction along an outer edge of the die hole portion 35a, and then undergoes tensile deformation in a direction in which the metal sheet is pressed into the die hole portion 35a. The direction of compressive deformation in the primary path thus does not coincide with the direction of tensile deformation in the secondary path.

Fracture of a portion of the metal sheet deformed in the deformation path that changes from compressive deformation to tensile deformation is considered to be related to work hardening caused by the compressive deformation in the primary path and the subsequent tensile deformation in the secondary path. Therefore, in the basic forming test in a press forming limit diagram acquisition method according to the present invention, as in the above-described drawing, the compressive direction in the primary path is not necessarily required to coincide with the tensile direction in the secondary path.

Thus, the basic forming test in the basic forming test process S11 is not limited to a uniaxial compression-tension test in which the compressive direction coincides with the tensile direction. As described in the embodiment, drawing in which the compressive direction does not coincide with the tensile direction may be adopted as the basic forming test.

In the uniaxial compression-tension test in which the compressive deformation is reversed to the tensile deformation in plane of the metal sheet, buckling occurs during compressive deformation of the metal sheet, so that an amount of compressive deformation capable of being imparted to the metal sheet remains in a narrow range. In contrast, in the drawing, a large amount of compressive deformation can be imparted in the primary path in which the metal sheet undergoes compressive deformation. Furthermore, large tensile deformation can be given in the subsequent secondary path. As a result, in the basic forming test through drawing, the maximum thickness increment in compressive deformation and the relative thickness decrement in tensile deformation after the compressive deformation can be determined in a wide range. Therefore, the forming limit diagram for distinguishing the presence or absence of fracture occurrence can be created in a wide range. The accuracy of the forming limit diagram can be increased while the range of the applicable forming limit condition can be widened.

In the basic forming test through drawing, a forming condition can be changed by changing the inflow resistance of metal flow toward the die hole portion 35a (see FIG. 3) of the metal sheet. Then, the maximum thickness increment based on compressive deformation and the relative thickness decrement based on tensile deformation can be changed by changing a forming condition in the basic forming test.

For example, in the basic forming test in which a metal sheet is drawn by using the tool 31 of press forming, examples of the forming condition for increasing the inflow resistance of metal flow toward the die hole portion 35a of the metal sheet include the following. That is, for example, the dimension of the metal sheet may be increased. Pressure of the blank holder 37 may be increased. A lubricated condition for increasing the friction coefficient between the metal sheet and the die 35 and the blank holder 37 may be set. A bead-shape may be imparted to the metal sheet.

Compressive deformation of the metal sheet in the outer edge circumferential direction of the die hole portion 35a is alleviated by inhibiting flow toward the die hole portion 35a of the metal sheet under the forming condition for increasing the inflow resistance of metal flow, which decreases the maximum thickness increment. Moreover, a decrease in metal flow drawn into the die hole portion 35a increases tensile deformation of the metal sheet due to drawing, and increases the relative thickness decrement.

In the drawing of the metal sheet, a wrinkle that has occurred in the flange portion may induce excessive drawing force to cause fracture (crack) of the metal sheet. Such fracture of the metal sheet is different from fracture in a portion in which the deformation path changes from compressive deformation to tensile deformation targeted by the present invention, so that the presence or absence of fracture occurrence cannot be appropriately determined. Thus, in a case where the basic forming test is conducted by drawing of the metal sheet, wrinkle occurrence is preferably prevented by using the blank holder 37 as illustrated in FIG. 3.

When drawing is performed with the tool 31 of press forming as illustrated in FIG. 3, a radius of die part of the shoulder part 35b of a die smaller than the thickness of the metal sheet rapidly prompts a thickness reduction in tensile deformation after compressive deformation to cause fracture. The presence or absence of fracture occurrence thus cannot be appropriately determined. Thus, the radius of die part of the die 35 is preferably several times or larger than the thickness of the metal sheet.

The basic forming test through drawing is not limited to a test in which the square tube type bottomed columnar container 41 is formed by using the above-described tool 31 of press forming in FIG. 3. In the basic forming test, drawing may be performed to form a cylindrical bottomed columnar container (not illustrated).

In the above description, in the first calculation process S15, in one example, the true strain "εcompression" in compressive deformation given by Expression (1) is determined as the maximum thickness increment, and the true strain "εtension after compression" given by Expression (2) is determined as the relative thickness decrement. In the present invention, the maximum thickness increment and the relative thickness decrement determined as a basic forming test fracture estimation parameter or a press forming fracture estimation parameter may be as follows. That is, the maximum thickness increment and the relative thickness decrement may include nominal strain obtained by converting true strain in compressive deformation and tensile deformation after the compressive deformation and those calculated by setting true strain in the thickness direction in compressive deformation as plus and setting true strain in the thickness direction in tensile deformation as minus.

In the press forming fracture determination method according to the present invention, even when a metal sheet undergoes press forming in a plurality of (two or more) processes, the presence or absence of fracture occurrence in a portion in which the deformation path changes from compressive deformation to tensile deformation in the press forming having the plurality of processes can be determined. In this case, the press forming limit determination step is executed for all or any of the plurality of processes.

For example, when the metal sheet is pressed to form an intermediate forming product in a first process and the intermediate forming product is pressed to form a press forming product having a target shape in a subsequent second process, the intermediate forming product is preferably targeted instead of the metal sheet in the press forming limit determination step for the second process. That is, the press forming FEM analysis process, the press forming fracture determination region setting process, the press forming fracture estimation parameter calculation process, and the press forming presence or absence of fracture occurrence determination process are required to be executed for the intermediate forming product.

<Press Forming Fracture Determination Device>

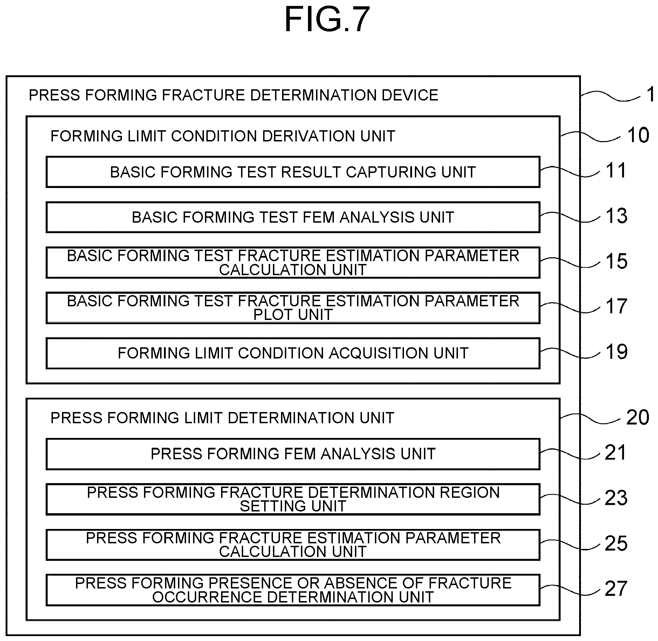

A press forming fracture determination device 1 according to the first embodiment of the present invention is used to determine the presence or absence of fracture occurrence in a portion of a metal sheet in which a deformation path changes from compressive deformation to tensile deformation in press forming on the metal sheet. As illustrated in FIG. 7, the press forming fracture determination device 1 includes a forming limit condition derivation unit 10 and a press forming limit determination unit 20. The press forming fracture determination device 1 may include a central processing unit (CPU) of a computer (e.g., PC). In this case, each of the above-described units functions when the CPU of the computer executes a predetermined program.

<<Forming Limit Condition Derivation Unit>>

The forming limit condition derivation unit 10 conducts a basic forming test in which a metal sheet is deformed in a deformation path that changes from compressive deformation to tensile deformation to derive a forming limit condition related to the presence or absence of fracture occurrence in a portion that changes from compressive deformation to tensile deformation of the metal sheet. As illustrated in FIG. 7, the forming limit condition derivation unit 10 includes a basic forming test result capturing unit 11, a basic forming test FEM analysis unit 13, a basic forming test fracture estimation parameter calculation unit 15, a basic forming test fracture estimation parameter plot unit 17, and a forming limit condition acquisition unit 19.

(Basic Forming Test Result Capturing Unit)

The basic forming test result capturing unit 11 captures a test result related to the presence or absence of fracture occurrence in a portion of the metal sheet in which a deformation path changes from compressive deformation to tensile deformation acquired for various forming conditions of a basic forming test in which a metal sheet is deformed in a deformation path that changes from compressive deformation to tensile deformation.

The presence or absence of fracture occurrence in a portion of the metal sheet in which a deformation path changes from compressive deformation to tensile deformation is acquired by, for example, preliminarily conducting a basic forming test on the metal sheet in a procedure similar to that of the basic forming test process S11 of the press forming fracture determination method according to the first embodiment described above.

(Basic Forming Test FEM Analysis Unit (Hereinafter, Abbreviated as First Analysis Unit))

The first analysis unit 13 performs FEM analysis for a basic forming test on a metal sheet for various forming conditions to calculate a change in the thickness of the metal sheet.

The FEM analysis of the first analysis unit 13 adopts the same forming conditions as the various forming conditions of the basic forming test in which the presence or absence of fracture occurrence captured by the basic forming test result capturing unit 11 is acquired.

(Basic Forming Test Fracture Estimation Parameter Calculation Unit (Hereinafter, Abbreviated as First Calculation Unit))

The first calculation unit 15 calculates basic forming test fracture estimation parameters for various forming conditions based on the change in the thickness of the metal sheet calculated by the first analysis unit 13. A basic forming test fracture estimation parameter includes a maximum thickness increment and a relative thickness decrement. The maximum thickness increment is an amount of change in thickness until the metal sheet reaches the maximum thickness hc in compressive deformation of the deformation path. The relative thickness decrement is an amount of change in thickness until the deformation path changes from compressive deformation to tensile deformation and the metal sheet reaches the minimum thickness ht from the maximum thickness hc.

(Basic Forming Test Fracture Estimation Parameter Plot Unit (Hereinafter, Abbreviated as Plot Unit))

As illustrated in FIG. 6 in one example, the plot unit 17 associates the presence or absence of fracture occurrence in the metal sheet under the various forming conditions captured by the basic forming test result capturing unit 11 with the basic forming test fracture estimation parameters determined by the first calculation unit 15 for the various forming conditions. Then, the plot unit 17 performs plotting on the two-dimensional coordinates with the maximum thickness increment and the relative thickness decrement as axes.

(Forming Limit Condition Acquisition Unit (Hereinafter, Abbreviated as Acquisition Unit))

The acquisition unit 19 acquires a forming limit diagram for distinguishing the presence or absence of fracture occurrence in a portion of the metal sheet deformed in the deformation path that changes from compressive deformation to tensile deformation as a forming limit condition based on the distribution of the presence or absence of fracture occurrence plotted by the plot unit 17 on the two-dimensional coordinates.

<<Press Forming Limit Determination Unit>>

The press forming limit determination unit 20 determines the presence or absence of fracture occurrence in a portion of a metal sheet in which a deformation path changes from compressive deformation to tensile deformation in press forming on the metal sheet based on the forming limit condition derived by the forming limit condition derivation unit 10. As illustrated in FIG. 7, the press forming limit determination unit 20 includes a press forming FEM analysis unit 21, a press forming fracture determination region setting unit 23, a press forming fracture estimation parameter calculation unit 25, and a press forming presence or absence of fracture occurrence determination unit 27.

(Press Forming FEM Analysis Unit (Hereinafter, Abbreviated as Second Analysis Unit))

The second analysis unit 21 performs press forming FEM analysis for the metal sheet. As in the second analysis process S21 of the first embodiment described above, in the FEM analysis in the second analysis unit 21, changes in strain, stress, thickness, and the like generated in the metal sheet in press forming is determined for each element used for FEM analysis.

(Press Forming Fracture Determination Region Setting Unit (Hereinafter, Abbreviated as Setting Unit))

The setting unit 23 sets a region in which the deformation path changes from compressive deformation to tensile deformation in press forming on the metal sheet as a fracture occurrence determination region for determining the presence or absence of fracture occurrence based on a FEM analysis result from the second analysis unit 21.

For example, the setting unit 23 can set an element in which a strain ratio obtained by dividing the minimum principal strain by the maximum principal strain changes from negative (compression) to positive (tension) as a fracture determination region for determining the presence or absence of fracture occurrence in press forming based on strain determined for each element.

(Press forming Fracture Estimation Parameter Calculation Unit (Hereinafter, Abbreviated as Second Calculation Unit))

The second calculation unit 25 determines a press forming fracture estimation parameter for a fracture occurrence determination region set by the setting unit 23 based on the FEM analysis result from the second analysis unit 21. The press forming fracture estimation parameter includes a maximum thickness increment and a relative thickness decrement. The maximum thickness increment is an amount of change in thickness up to the maximum thickness in compressive deformation. The relative thickness decrement is an amount of change in thickness from the maximum thickness up to the minimum thickness during change from compressive deformation to tensile deformation.

(Press Forming Presence or Absence of Fracture Occurrence Determination Unit (Hereinafter, Abbreviated as Determination Unit))

The determination unit 27 compares the press forming fracture estimation parameter calculated by the second calculation unit 25 with the forming limit condition derived by the forming limit condition derivation unit 10 to determine the presence or absence of fracture occurrence in the fracture occurrence determination region.

<Press Forming Fracture Determination Program>

The first embodiment of the present invention can be configured as a press forming fracture determination program that causes each unit of the press forming fracture determination device 1 including a computer to function. That is, the press forming fracture determination program according to the first embodiment of the present invention is used to determine the presence or absence of fracture occurrence in a portion of a metal sheet in which a deformation path changes from compressive deformation to tensile deformation in press forming on the metal sheet. Then, the press forming fracture determination program has a function of causing a computer to operate as the forming limit condition derivation unit 10 and the press forming limit determination unit 20 as illustrated in FIG. 7 in one example.

The press forming fracture determination program has a function of causing the forming limit condition derivation unit 10 to operate as the basic forming test result capturing unit 11, the first analysis unit 13, the first calculation unit 15, the plot unit 17, and the acquisition unit 19 as illustrated in FIG. 7. Furthermore, the press forming fracture determination program has a function of causing the press forming limit determination unit 20 to operate as the second analysis unit 21, the setting unit 23, the second calculation unit 25, and the determination unit 27.

As described above, the press forming fracture determination device and the press forming fracture determination program according to the first embodiment of the present invention acquire a forming limit condition related to the presence or absence of fracture occurrence in a portion that changes from compressive deformation to tensile deformation of the metal sheet. Then, the presence or absence of fracture occurrence in a portion of a metal sheet in which a deformation path changes from compressive deformation to tensile deformation in press forming on the metal sheet can be determined based on the acquired forming limit condition.

[Second Embodiment]

<Press Forming Fracture Inhibition Method>

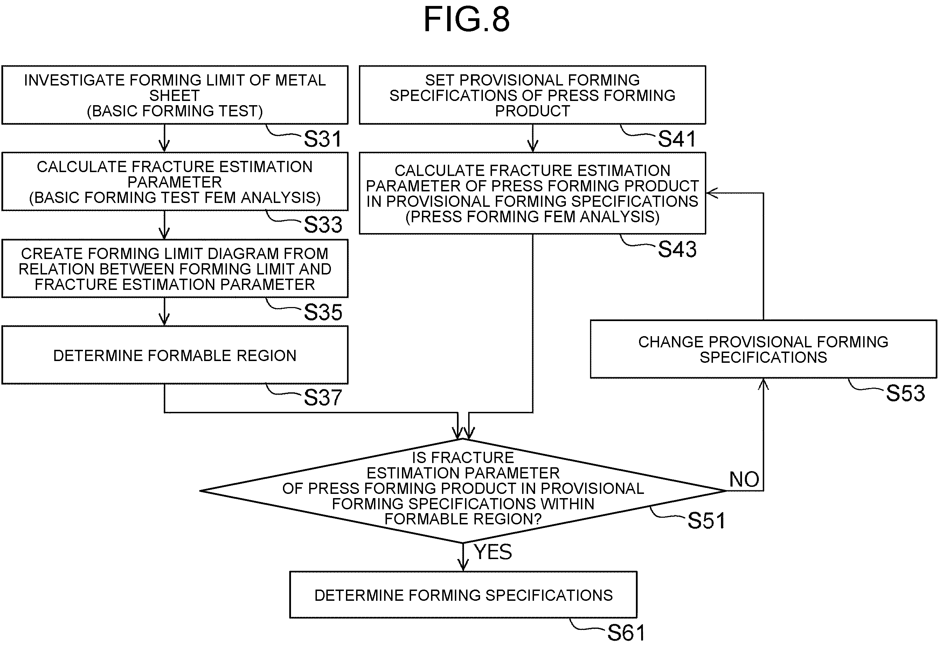

A press forming fracture inhibition method according to a second embodiment of the present invention is used to determine the presence or absence of fracture occurrence in a portion of a metal sheet in which a deformation path changes from compressive deformation to tensile deformation in press forming on the metal sheet by the press forming fracture determination method described in the first embodiment of the present invention described above. Then, a forming condition for inhibiting fracture occurrence in press forming is determined based on the determined result. The press forming fracture inhibition method according to the second embodiment will be described below with reference to FIG. 8.

In the second embodiment, as in the basic forming test process S11 (FIG. 1) of the press forming fracture determination method according to the first embodiment, a basic forming tests in which a metal sheet is deformed in a deformation path that changes from compressive deformation to tensile deformation is first conducted for various forming conditions. Then, a forming limit of the metal sheet is investigated for various forming conditions by acquiring the presence or absence of fracture occurrence in a portion of the metal sheet in which a deformation path changes from compressive deformation to tensile deformation (S31) .

Subsequently, as in the first analysis process S13 (FIG. 1) of the press forming fracture determination method according to the first embodiment, FEM analysis is performed for the basic forming test on the metal sheet to calculate a basic forming test fracture estimation parameter (S33). The basic forming test fracture estimation parameter is required to be calculated in a manner similar to that in the first calculation process S15 (FIG. 1) of the first embodiment described above.

Subsequently, processing similar to the procedures (FIG. 1) of the plot process S17 and the acquisition process S19 of the press forming fracture determination method according to the first embodiment is executed. That is, a forming limit diagram is created from the relation between the forming limit determined in the basic forming test on the metal sheet and the basic forming test fracture estimation parameter calculated by the FEM analysis for the basic forming test (S35).

Then, a formable region is determined from the created forming limit diagram (S37). The formable region has a relative thickness decrement smaller than the forming limit diagram on the two-dimensional coordinates in FIG. 6 in one example.

Next, provisional forming specifications of a press forming product formed by pressing the metal sheet are set (S41). Subsequently, FEM analysis for press forming of the press forming product in the set provisional forming specifications is performed to calculate a press forming fracture estimation parameter in the press forming (S43). The press forming fracture estimation parameter is calculated in a procedure similar to those of the second analysis process S21, the setting process S23, and the second calculation process S25 (FIG. 1) of the press forming fracture determination method according to the first embodiment.

Then, it is determined whether or not the press forming fracture estimation parameter of the press forming product calculated by the FEM analysis for the press forming in the provisional forming specifications is within the formable region determined in the basic forming test on the metal sheet (S51).

When it is determined that the press forming fracture estimation parameter is not within the formable region, the provisional forming specifications are changed (S53), and the press forming fracture estimation parameter of the press forming product in the changed provisional forming specifications is calculated again (S43). The change of the provisional forming specifications changes, for example, a blank shape and a forming condition. For the forming condition, for example, when drawing is performed, an increase in the pressure of a blank holder increases resistance against material inflow from a portion corresponding to a flange portion of the metal sheet. This result in a decrease in the maximum thickness increment in compressive deformation and an increase in the relative thickness decrement in tensile deformation. Then, a smaller maximum thickness increment increases a limit value of the relative thickness decrement, which results in effective fracture inhibition.

Then, when it is determined that the press forming fracture estimation parameter is within the formable region, the provisional forming specifications of the press forming product at the time when the press forming fracture estimation parameter is within the formable region is determined as forming specifications (S61).

As described above, according to the press forming fracture inhibition method of the second embodiment, fracture occurrence in a portion of a metal sheet in which a deformation path changes from compressive deformation to tensile deformation in press forming on the metal sheet is determined. This enables a change in the forming condition based on the determination, such as a change in the shape of the metal sheet and modification of a tool of press forming. A period in which a forming condition of actual pressing is determined through trial and error can be significantly shortened.

Although a result in a case where a steel sheet having 980 MPa-class is used as a test material of a metal sheet is indicated in the above description according to the first and second embodiments of the present invention, the present invention does not limit a material strength and thickness of the metal sheet. The material of the metal sheet is not limited to the steel sheet. Other metal materials may be used.

[Example]

An experiment and analysis for verifying the effects of the press forming fracture determination method and the press forming fracture inhibition method according to the present invention were conducted. The experiment and analysis will be described below.

In an example, determination of fracture occurrence in a component pressed and formed through drawing and inhibition thereof were verified based on a forming limit condition derived by a basic forming test in which a metal sheet is deformed in a deformation path that changes from compressive deformation to tensile deformation and FEM analysis therefor.

First, as described in the first embodiment, a basic forming test in which a metal sheet is drawn to form a square tube type bottomed columnar container 41 and FEM analysis therefor were conducted by using FIG. 3. Then, as illustrated in FIG. 6, a forming limit diagram was acquired as a forming limit condition related to fracture occurrence in a portion of the metal sheet deformed in a deformation path that changes from compressive deformation to tensile deformation. For the metal sheet, a steel sheet having a tensile strength of 980 MPa-class and a thickness of 1.4 mm was used as a test material.

In the example, the forming limit diagram represented by a cubic inverse function in Expression (3) described in the first embodiment was acquired. Coefficients a to e in Expression (3) have the above-described values.

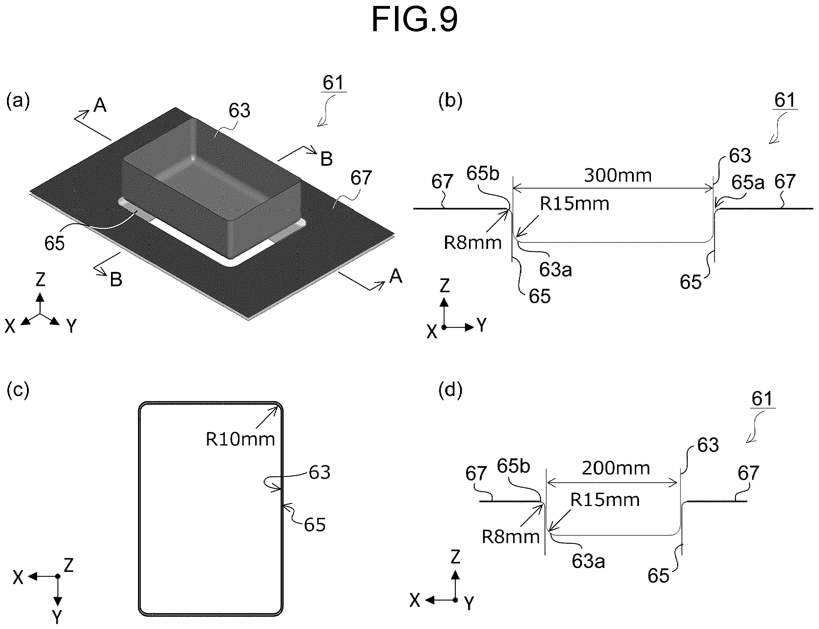

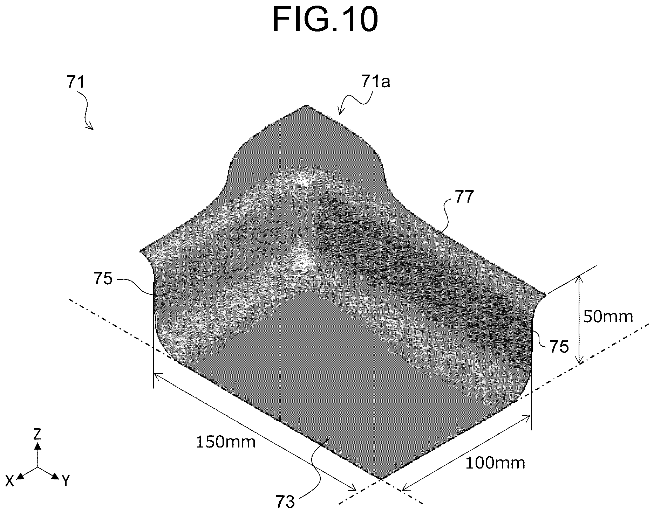

Next, FEM analysis was performed for a press forming course in which drawing is performed to form a component 71 by using a tool 61 of press forming in FIG. 9. The component 71 simulates a battery case of an automobile including a bottom portion 73, side wall portions 75, and a flange portion 77 as illustrated in FIG. 10. Then, the presence or absence of fracture occurrence in the component 71 was determined. As illustrated in FIG. 10, the FEM analysis was performed for 1/4 of a region of the component 71 around a corner portion 71a in top view in consideration of the symmetry of the component shape.

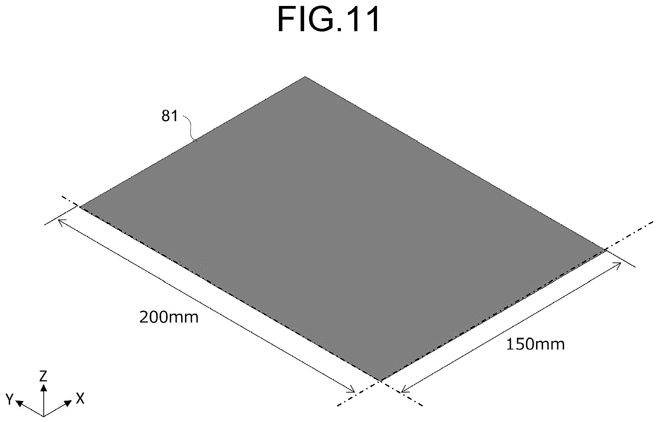

In the drawing for the component 71, a metal sheet 81 having the shape in FIG. 11 was used. As in the basic forming test, a steel sheet having a tensile strength of 980 MPa-class and a thickness of 1.4 mm was used as a test material.

The tool 61 of press forming includes a punch 63, a die 65, and a blank holder 67. A shoulder part 63a of the punch has a radius of shoulder part of R15 mm. A shoulder part 65b of the die 65 has a radius of die part of R8 mm. Furthermore, the blank holder 67 has a pressure of 5 tonf against the metal sheet 81 (FIG. 11).

In the drawing for the component 71, the side wall portions 75 of the corner portion 71a were deformed and formed in the deformation path that changes from compressive deformation to tensile deformation, so that the portions were set as regions for which the presence or absence of fracture occurrence is to be determined.

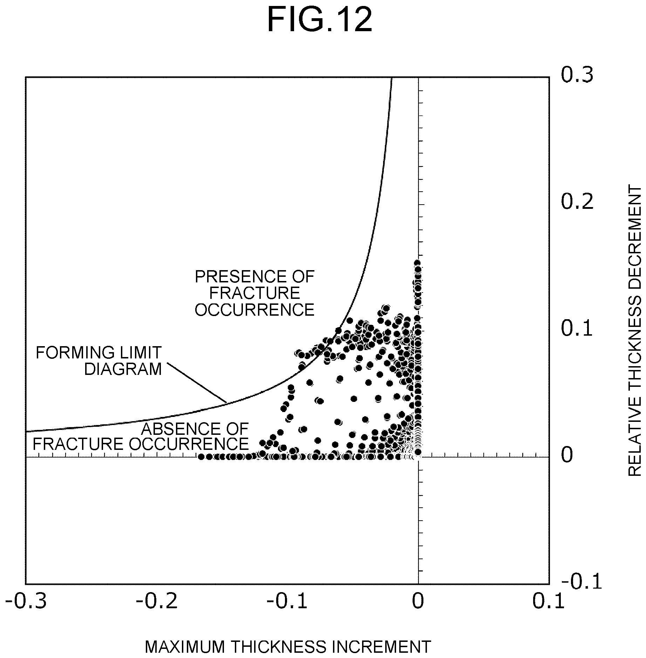

FIG. 12 illustrates press forming fracture estimation parameters and a forming limit diagram together. The press forming fracture estimation parameters were calculated for respective elements of the side wall portions 75 by FEM analysis for drawing to form the component 71 using the tool 61 of press forming. The forming limit diagram was determined by the basic forming test.

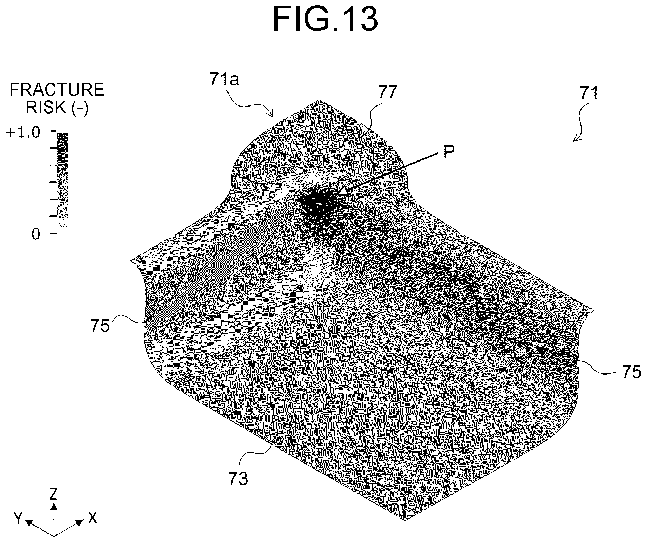

Ratios of the calculated press forming fracture estimation parameters to the forming limit (hereinafter, referred to as "fracture risk") were calculated. FIG. 13 is a contour diagram in which the ratios are displayed on the component 71. The fracture risk is a ratio of a relative thickness decrement of a press forming fracture estimation parameter calculated for each element of the side wall portions 75 to a value of the relative thickness decrement of the forming limit diagram corresponding to the maximum thickness increment of the press forming fracture estimation parameter. When the fracture risk exceeds 1.0, fracture occurrence determination is indicated since the relative thickness decrement in press forming is larger than the relative thickness decrement of the forming limit condition with respect to the maximum thickness increment in the press forming. Furthermore, even when the fracture risk has a value of less than 1.0, when the fracture risk has a high value in a range of 0.8 to 1.0, easiness of fracture occurrence is indicated.

In FIG. 12, some of the press forming fracture estimation parameters calculated for the side wall portions 75 of the component 71 are plotted in a region in which the relative thickness decrement is larger than the forming limit diagram. It is thus determined that the side wall portions 75 have a portion in which fracture occurs. Furthermore, FIG. 13 reveals that the fracture risk has a high value more than 0.8 on the side of the flange portion 77 of a ridge line between the side wall portions 75 of the corner portion 71a (P portion in FIG. 13) and fracture easily occurs.

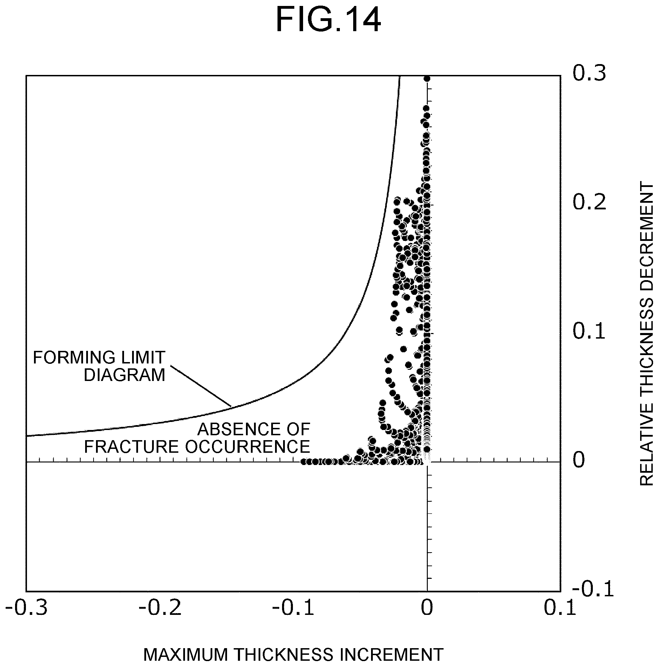

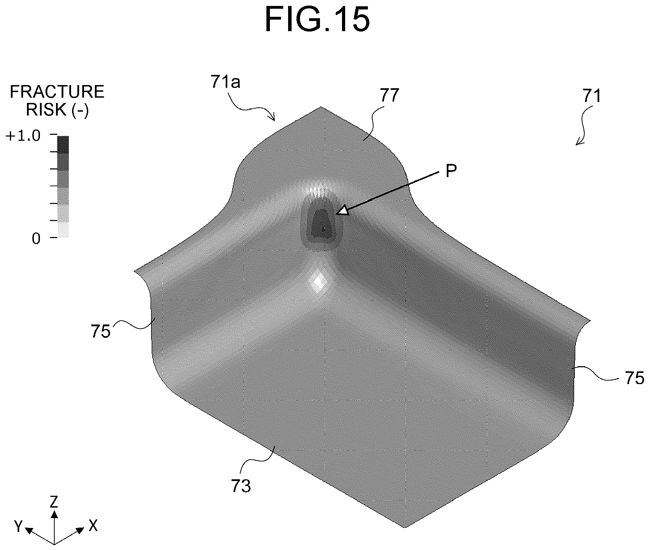

Next, the pressure of the blank holder 67 was changed from 5 to 20 tonf to prevent fracture occurrence in drawing for the component 71, and FEM analysis was performed based on fracture parameters determined as illustrated in FIGS. 12 and 13. Then, press forming fracture estimation parameters were calculated. FIG. 14 is a graph in which the calculated press forming fracture estimation parameters are plotted on two-dimensional coordinates of the maximum thickness increment and the relative thickness decrement. Moreover, FIG. 15 is a contour diagram in which the fracture risk determined by using the calculated fracture estimation parameters is displayed on the component 71.

As illustrated in FIG. 14, the press forming fracture estimation parameters are plotted in a region in which the relative thickness decrement is smaller than the forming limit diagram, so that it can be said that fracture in the side wall portions 75 can be inhibited. Moreover, the fracture risk of the P portion of the side wall portions 75 in FIG. 13 having a high fracture risk is reduced as illustrated in FIG. 15, which reveals that fracture in the side wall portions 75 was successfully inhibited as in the result in FIG. 14.

As described above, increasing the pressure of the blank holder 67 against the metal sheet 81 increases resistance against material inflow from a portion corresponding to the flange portion 77 of the metal sheet 81 to a die hole portion 65a (FIG. 12). This decreases the maximum thickness increment in compressive deformation of the metal sheet 81, and increases the relative thickness decrement in tensile deformation after the compressive deformation. Then, a smaller absolute value of the maximum thickness increment increases a value of the relative thickness decrement on a thickness limit diagram. Thus, it is considered that fracture occurrence in the press forming course was successfully inhibited.

As described above, according to the press forming fracture determination method of the present invention, the presence or absence of fracture occurrence in a portion of a metal sheet deformed in a deformation path that changes from compressive deformation to tensile deformation in press forming on the metal sheet can be determined. Moreover, according to the press forming fracture inhibition method of the present invention, the fracture occurrence in a portion of a metal sheet in which a deformation path changes from compressive deformation to tensile deformation in press forming on the metal sheet is determined, and a forming condition is changed based on the determination. This indicates that a forming condition capable of inhibiting fracture occurrence in press forming can be determined.

Industrial Applicability

According to the present invention, it is possible to provide a press forming fracture determination method, a press forming fracture determination device, and a press forming fracture determination program for determining the presence or absence of fracture occurrence in a portion of a metal sheet in which a deformation path changes from compressive deformation to tensile deformation in a press forming course of the metal sheet. Furthermore, according to the present invention, a press forming fracture inhibition method capable of inhibiting fracture occurrence based on a determination of the presence or absence of the fracture occurrence can be provided.

Reference Signs List

1 PRESS FORMING FRACTURE DETERMINATION DEVICE
10 FORMING LIMIT CONDITION DERIVATION UNIT
11 BASIC FORMING TEST RESULT CAPTURING UNIT
13 BASIC FORMING TEST FEM ANALYSIS UNIT (FIRST ANALYSIS UNIT)
15 BASIC FORMING TEST FRACTURE ESTIMATION PARAMETER CALCULATION UNIT (FIRST CALCULATION UNIT)
17 BASIC FORMING TEST FRACTURE ESTIMATION PARAMETER PLOT UNIT (PLOT UNIT)
19 FORMING LIMIT CONDITION ACQUISITION UNIT (ACQUISITION UNIT)
20 PRESS FORMING LIMIT DETERMINATION UNIT
21 PRESS FORMING FEM ANALYSIS UNIT (SECOND ANALYSIS UNIT)
23 PRESS FORMING FRACTURE DETERMINATION REGION SETTING UNIT (SETTING UNIT)
25 PRESS FORMING FRACTURE ESTIMATION PARAMETER CALCULATION UNIT (SECOND CALCULATION UNIT)
27 PRESS FORMING PRESENCE OR ABSENCE OF FRACTURE OCCURRENCE DETERMINATION UNIT (DETERMINATION UNIT)
31 TOOL OF PRESS FORMING
33 PUNCH
33a SHOULDER PART OF PUNCH
35 DIE
35a DIE HOLE PORTION
35b SHOULDER PART OF DIE
37 BLANK HOLDER
41 BOTTOMED COLUMNAR CONTAINER
41a CORNER PORTION
43 BOTTOM PORTION

45 SIDE WALL PORTION
47 FLANGE PORTION
51 METAL SHEET
61 TOOL OF PRESS FORMING
63 PUNCH
63a SHOULDER PART OF PUNCH
65 DIE
65a DIE HOLE PORTION
65b SHOULDER PART OF DIE
67 BLANK HOLDER
71 COMPONENT
71a CORNER PORTION
73 BOTTOM PORTION
75 SIDE WALL PORTION
77 FLANGE PORTION
81 METAL SHEET

**Claims**

1. A press forming fracture determination method for determining presence or absence of fracture occurrence in a portion of a metal sheet in which a deformation path changes from compressive deformation to tensile deformation in press forming on the metal sheet, the method comprising:

   a forming limit condition derivation step; and
   a press forming limit determination step,
   wherein the forming limit condition derivation step includes:

   a basic forming test process in which a basic forming test in which the metal sheet is deformed in the deformation path is conducted for various forming conditions and the presence or absence of fracture occurrence in the portion of the metal sheet in which the deformation path changes from compressive deformation to tensile deformation is acquired for the various forming conditions;
   a basic forming test FEM analysis process in which FEM analysis for the basic forming test on the metal sheet is performed for various forming conditions and a change in a thickness of the metal sheet is calculated;
   a basic forming test fracture estimation parameter calculation process in which a maximum thickness increment and a relative thickness decrement are determined as basic forming test fracture estimation parameters for the various forming conditions based on the change in the thickness of the metal sheet calculated in the basic forming test FEM analysis process, the maximum thickness increment being an amount of a change in thickness until the metal sheet reaches a maximum thickness in compressive deformation of the deformation path, the relative thickness decrement being an amount of a change in thickness until the metal sheet changes in the deformation path from compressive deformation to tensile deformation to reach a minimum thickness from the maximum thickness;
   a basic forming test fracture estimation parameter plot process in which the presence or absence of fracture occurrence acquired for the various forming conditions in the basic forming test process and the basic forming test fracture estimation parameters, determined for the various forming conditions in the basic forming test fracture estimation parameter calculation process, are plotted on two-dimensional coordinates with the maximum thickness increment and the relative thickness decrement as axes in association with each other; and
   a forming limit condition acquisition process in which a forming limit diagram for distinguishing the presence or absence of fracture occurrence in a portion of the metal sheet deformed in the deformation path is determined as a forming limit condition based on distribution of the presence or absence of fracture occurrence plotted on the two-dimensional coordinates, and

   the press forming limit determination step includes:

   a press forming FEM analysis process in which FEM analysis for press forming for the metal sheet is performed;
   a press forming fracture determination region setting process in which a region of the metal sheet in which the deformation path changes from compressive deformation to tensile deformation is set as a fracture occurrence determination region for determining the presence or absence of fracture occurrence based on a result of the FEM analysis in the press forming FEM analysis process;

a press forming fracture estimation parameter calculation process in which the maximum thickness increment in compressive deformation in press forming on the metal sheet and the relative thickness decrement in tensile deformation in the press forming are calculated as press forming fracture estimation parameters in the press forming for the fracture occurrence determination region set in the press forming fracture determination region setting process; and

a press forming presence or absence of fracture occurrence determination process in which the presence or absence of fracture occurrence in the fracture occurrence determination region is determined by comparing the press forming fracture estimation parameters calculated in the press forming fracture estimation parameter calculation process with the forming limit condition acquired in the forming limit condition acquisition process.

2. A press forming fracture determination device for determining presence or absence of fracture occurrence in a portion of a metal sheet in which a deformation path changes from compressive deformation to tensile deformation in press forming on the metal sheet, the device comprising:

a forming limit condition derivation unit; and
a press forming limit determination unit,
wherein the forming limit condition derivation unit includes:

a basic forming test result capturing unit configured to capture a test result related to the presence or absence of fracture occurrence in the portion of the metal sheet in which the deformation path changes from compressive deformation to tensile deformation acquired for various forming conditions of a basic forming test in which the metal sheet is deformed in the deformation path;

a basic forming test FEM analysis unit configured to perform FEM analysis for the basic forming test on the metal sheet for the various forming conditions and calculate a change in a thickness of the metal sheet;

a basic forming test fracture estimation parameter calculation unit configured to determine a maximum thickness increment and a relative thickness decrement as basic forming test fracture estimation parameters for the various forming conditions based on the change in the thickness of the metal sheet calculated by the basic forming test FEM analysis unit, the maximum thickness increment being an amount of a change in thickness until the metal sheet reaches a maximum thickness in compressive deformation of the deformation path, the relative thickness decrement being an amount of a change in thickness until the metal sheet changes in the deformation path from compressive deformation to tensile deformation to reach a minimum thickness from the maximum thickness;

a basic forming test fracture estimation parameter plot unit configured to plot the presence or absence of fracture occurrence captured by the basic forming test result capturing unit and the basic forming test fracture estimation parameters determined by the basic forming test fracture estimation parameter calculation unit on two-dimensional coordinates with the maximum thickness increment and the relative thickness decrement as axes in association with each other; and

a forming limit condition acquisition unit configured to determine a forming limit diagram for distinguishing the presence or absence of fracture occurrence in a portion of the metal sheet deformed in the deformation path as a forming limit condition based on distribution of the presence or absence of fracture occurrence plotted on the two-dimensional coordinates, and

the press forming limit determination unit includes:

a press forming FEM analysis unit configured to perform FEM analysis for press forming for the metal sheet;

a press forming fracture determination region setting unit configured to set a region of the metal sheet in which the deformation path changes from compressive deformation to tensile deformation as a fracture occurrence determination region for determining the presence or absence of fracture occurrence based on a result of the FEM analysis performed by the press forming FEM analysis unit;

a press forming fracture estimation parameter calculation unit configured to determine the maximum thickness increment in compressive deformation in press forming on the metal sheet and the relative thickness decrement in tensile deformation in the press forming as press forming fracture estimation parameters in the press forming for the fracture occurrence determination region set by the press forming fracture determination region setting unit; and

a press forming presence or absence of fracture occurrence determination unit configured to determine the presence or absence of fracture occurrence in the fracture occurrence determination region by comparing the press forming fracture estimation parameters calculated by the press forming fracture estimation parameter calculation unit with the forming limit condition acquired by the forming limit condition acquisition unit.

3. A press forming fracture determination program for determining presence or absence of fracture occurrence in a portion of a metal sheet in which a deformation path changes from compressive deformation to tensile deformation in press forming on the metal sheet, the program having a function of causing a computer to operate as:

a forming limit condition derivation unit; and
a press forming limit determination unit,
wherein the press forming fracture determination program has a function of causing the forming limit condition derivation unit to operate as:

a basic forming test result capturing unit configured to capture a test result related to the presence or absence of fracture occurrence in the portion of the metal sheet in which the deformation path changes from compressive deformation to tensile deformation acquired for various forming conditions of a basic forming test in which the metal sheet is deformed in the deformation path;
a basic forming test FEM analysis unit configured to perform FEM analysis for the basic forming test on the metal sheet for the various forming conditions and calculate a change in a thickness of the metal sheet;
a basic forming test fracture estimation parameter calculation unit configured to determine a maximum thickness increment and a relative thickness decrement as basic forming test fracture estimation parameters for the various forming conditions based on the change in the thickness of the metal sheet calculated by the basic forming test FEM analysis unit, the maximum thickness increment being an amount of a change in thickness until the metal sheet reaches a maximum thickness in compressive deformation of the deformation path, the relative thickness decrement being an amount of a change in thickness until the metal sheet changes in the deformation path from compressive deformation to tensile deformation to reach a minimum thickness from the maximum thickness;
a basic forming test fracture estimation parameter plot unit configured to plot the presence or absence of fracture occurrence in the metal sheet under the various forming conditions captured by the basic forming test result capturing unit and the basic forming test fracture estimation parameters determined by the basic forming test fracture estimation parameter calculation unit on two-dimensional coordinates with the maximum thickness increment and the relative thickness decrement as axes in association with each other; and
a forming limit condition acquisition unit configured to determine a forming limit diagram for distinguishing the presence or absence of fracture occurrence in a portion of the metal sheet deformed in the deformation path as a forming limit condition based on distribution of the presence or absence of fracture occurrence plotted on the two-dimensional coordinates, and

the press forming fracture determination program has a function of causing the press forming limit determination unit to operate as:

a forming limit condition acquisition unit configured to determine a forming limit condition related to the presence or absence of fracture occurrence in a portion of the metal sheet deformed in the deformation path;
a press forming FEM analysis unit configured to perform FEM analysis for press forming for the metal sheet;
a press forming fracture determination region setting unit configured to set a region of the metal sheet in which the deformation path changes from compressive deformation to tensile deformation as a fracture occurrence determination region for determining the presence or absence of fracture occurrence based on a result of the FEM analysis performed by the press forming FEM analysis unit;
a press forming fracture estimation parameter calculation unit configured to determine the maximum thickness increment in compressive deformation in press forming on the metal sheet and the relative thickness decrement in tensile deformation in the press forming as press forming fracture estimation parameters in the press forming for the fracture occurrence determination region set by the press forming fracture determination region setting unit; and
a press forming presence or absence of fracture occurrence determination unit configured to determine the presence or absence of fracture occurrence in the fracture occurrence determination region by comparing the press forming fracture estimation parameters calculated by the press forming fracture estimation parameter calculation unit with the forming limit condition acquired by the forming limit condition acquisition unit.

4. A press forming fracture inhibition method comprising:

determining presence or absence of fracture occurrence in a portion of a metal sheet in which a deformation path changes from compressive deformation to tensile deformation in press forming on the metal sheet by the press forming fracture determination method according to claim 1; and
determining a forming condition for inhibiting fracture occurrence in the press forming based on a result of the determining,
wherein, when determination of presence of fracture occurrence is made for the fracture occurrence determination region in the press forming presence or absence of fracture occurrence determination process, until determination of absence of fracture occurrence is made for the fracture occurrence determination region, a forming condition in the press forming FEM analysis process is changed, and the press forming FEM analysis process, the press forming fracture determination region setting process, the press forming fracture estimation parameter calculation process, and the press forming presence or absence of fracture occurrence determination process are repeated.

# FIG.1

| FORMING LIMIT CONDITION DERIVATION STEP | S10 |
|---|---|
| BASIC FORMING TEST PROCESS | S11 |
| BASIC FORMING TEST FEM ANALYSIS PROCESS | S13 |
| BASIC FORMING TEST FRACTURE ESTIMATION PARAMETER CALCULATION PROCESS | S15 |
| BASIC FORMING TEST FRACTURE ESTIMATION PARAMETER PLOT PROCESS | S17 |
| FORMING LIMIT CONDITION ACQUISITION PROCESS | S19 |

| PRESS FORMING LIMIT DETERMINATION STEP | S20 |
|---|---|
| PRESS FORMING FEM ANALYSIS PROCESS | S21 |
| PRESS FORMING FRACTURE DETERMINATION REGION SETTING PROCESS | S23 |
| PRESS FORMING FRACTURE ESTIMATION PARAMETER CALCULATION PROCESS | S25 |
| PRESS FORMING PRESENCE OR ABSENCE OF FRACTURE OCCURRENCE DETERMINATION PROCESS | S27 |

# FIG.2

THICKNESS REDUCTION RATIO $-\ell$n (THICKNESS AFTER DEFORMATION/ THICKNESS BEFORE DEFORMATION)

(+)

0

(-)

RELATIVE THICKNESS DECREMENT

$\varepsilon_{\text{tension after compression}}$

MAXIMUM THICKNESS INCREMENT

$\varepsilon_{\text{compression}}$

TIME (sec)

COMPRESSIVE DEFORMATION

TENSILE DEFORMATION

# FIG.3

(a)

(b)

(c)

EP 4 382 223 A1

# FIG.4

FIG.5

(a) SQUARE

(i) 200mm, 51

(ii) 175mm, 51

(iii) 150mm, 51

(iv) 125mm, 51

(b) OCTAGON

(i) 200mm, 25mm, 51

(ii) 200mm, 50mm, 51

(iii) 200mm, 75mm, 51

(c) CIRCLE

Φ200mm, 51

# FIG.6

MAXIMUM THICKNESS INCREMENT $-\ell\mathrm{n}(hc/h0)$

# FIG.7

PRESS FORMING FRACTURE DETERMINATION DEVICE — 1

FORMING LIMIT CONDITION DERIVATION UNIT — 10

BASIC FORMING TEST RESULT CAPTURING UNIT — 11

BASIC FORMING TEST FEM ANALYSIS UNIT — 13

BASIC FORMING TEST FRACTURE ESTIMATION PARAMETER CALCULATION UNIT — 15

BASIC FORMING TEST FRACTURE ESTIMATION PARAMETER PLOT UNIT — 17

FORMING LIMIT CONDITION ACQUISITION UNIT — 19

PRESS FORMING LIMIT DETERMINATION UNIT — 20

PRESS FORMING FEM ANALYSIS UNIT — 21

PRESS FORMING FRACTURE DETERMINATION REGION SETTING UNIT — 23

PRESS FORMING FRACTURE ESTIMATION PARAMETER CALCULATION UNIT — 25

PRESS FORMING PRESENCE OR ABSENCE OF FRACTURE OCCURRENCE DETERMINATION UNIT — 27

# FIG.8

INVESTIGATE FORMING LIMIT OF METAL SHEET (BASIC FORMING TEST) — S31

CALCULATE FRACTURE ESTIMATION PARAMETER (BASIC FORMING TEST FEM ANALYSIS) — S33

CREATE FORMING LIMIT DIAGRAM FROM RELATION BETWEEN FORMING LIMIT AND FRACTURE ESTIMATION PARAMETER — S35

DETERMINE FORMABLE REGION — S37

SET PROVISIONAL FORMING SPECIFICATIONS OF PRESS FORMING PRODUCT — S41

CALCULATE FRACTURE ESTIMATION PARAMETER OF PRESS FORMING PRODUCT IN PROVISIONAL FORMING SPECIFICATIONS (PRESS FORMING FEM ANALYSIS) — S43

IS FRACTURE ESTIMATION PARAMETER OF PRESS FORMING PRODUCT IN PROVISIONAL FORMING SPECIFICATIONS WITHIN FORMABLE REGION? — S51

CHANGE PROVISIONAL FORMING SPECIFICATIONS — S53

NO

YES

DETERMINE FORMING SPECIFICATIONS — S61

# FIG.9

(a)

61

63

A

B

B

A

67

65

Z

X — Y

(b)

61

67  65b    300mm    63  65a  67

R15mm

R8mm

63a

65        65

Z

X — Y

(c)

R10mm

63

65

X — Z

Y

(d)

61

67  65b    200mm    63    67

R15mm

R8mm

63a

65

Z

X — Y

EP 4 382 223 A1

# FIG.10

# FIG.11

# FIG.12

# FIG.13

# FIG.14

# FIG.15

# EP 4 382 223 A1

<table>
<tr><td colspan="2"></td><td colspan="2">INTERNATIONAL SEARCH REPORT</td><td>International application No.<br>**PCT/JP2022/024332**</td></tr>
</table>

| A. | CLASSIFICATION OF SUBJECT MATTER |
|---|---|

*B21D 22/00*(2006.01)i; *G06F 30/23*(2020.01)i; *G06F 113/22*(2020.01)n
FI: B21D22/00; G06F30/23; G06F113:22

According to International Patent Classification (IPC) or to both national classification and IPC

| B. | FIELDS SEARCHED |
|---|---|

Minimum documentation searched (classification system followed by classification symbols)

B21D22/00; G06F30/23; G06F113/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2000-275154 A (TOYOTA MOTOR CORP.) 06 October 2000 (2000-10-06)<br>paragraphs [0006]-[0148], fig. 1-9 | 1-4 |
| A | JP 2016-144825 A (NISSHIN STEEL CO., LTD.) 12 August 2016 (2016-08-12)<br>paragraphs [0033]-[0113], fig. 1-19 | 1-4 |
| A | JP 2012-166252 A (JFE STEEL CORP.) 06 September 2012 (2012-09-06)<br>paragraphs [0009]-[0040], fig. 1-14 | 1-4 |
| A | JP 2011-141237 A (NIPPON STEEL CORP.) 21 July 2011 (2011-07-21)<br>entire text, all drawings | 1-4 |
| A | JP 2013-054001 A (JFE STEEL CORP.) 21 March 2013 (2013-03-21)<br>entire text, all drawings | 1-4 |
| A | JP 2013-128956 A (JFE STEEL CORP.) 04 July 2013 (2013-07-04)<br>entire text, all drawings | 1-4 |
| A | JP 2009-204427 A (JFE STEEL CORP.) 10 September 2009 (2009-09-10)<br>entire text, all drawings | 1-4 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/024332**

| Patent document cited in search report | | | Publication date (day/month/year) | Patent family member(s) | Publication date (day/month/year) |
|---|---|---|---|---|---|
| JP | 2000-275154 | A | 06 October 2000 | (Family: none) | |
| JP | 2016-144825 | A | 12 August 2016 | (Family: none) | |
| JP | 2012-166252 | A | 06 September 2012 | (Family: none) | |
| JP | 2011-141237 | A | 21 July 2011 | (Family: none) | |
| JP | 2013-054001 | A | 21 March 2013 | (Family: none) | |
| JP | 2013-128956 | A | 04 July 2013 | US 2015/0231682 A1<br>entire text, all drawings<br>WO 2013/094177 A1<br>EP 2796220 A1<br>CN 104010745 A<br>TW 201331015 A<br>KR 10-2014-0105761 A | |
| JP | 2009-204427 | A | 10 September 2009 | (Family: none) | |

Form PCT/ISA/210 (patent family annex) (January 2015)

**REFERENCES CITED IN THE DESCRIPTION**

**Patent documents cited in the description**

- JP 2013128956 A

- JP 2009204427 A

**Non-patent literature cited in the description**

- Metallic materials - Sheet and strip - Determination of forming-limit curves - Part 2: Determination of forming-limit curves in the laboratory. *ISO 12004-2:2008,* 2008